# FASCICULE DE BREVET EUROPEEN

(11) **EP 3 383 058 B1**
(45) Date de publication et mention de la délivrance du brevet: **27.05.2020**
(21) Numéro de dépôt: 18164380.0
(22) Date de dépôt: 27.03.2018
(51) Int. Cl.: H04Q 9/00, G08B 13/14, G08B 13/08

(54) **PROCÉDÉ ET DISPOSITIF DE SURVEILLANCE D'AU MOINS UN OUVRANT PAR RAPPORT À UN DORMANT**
VERFAHREN UND VORRICHTUNG ZUR ÜBERWACHUNG DES ÖFFNUNGSZUSTAND ZWISCHEN EINES FLÜGELS UND EINER ZARGE
METHOD AND SYSTEM FOR MONITORING AT LEAST ONE PANEL OPENING IN COMPARISON TO A FRAME.

(30) Priorité: 28.03.2017 FR 1752595
(43) Date de publication de la demande: 03.10.2018
(73) Titulaire: Somfy Protect by Myfox, 31670 Labège (FR)
(72) Inventeur: FOURNIOLS, Jean-Yves, 31130 QUINT-FONSEGRIVES (FR); BACOU, Stéphane, 31320 CASTANET-TOLOSAN (FR); NIERCERON, Franck, 82000 MONTAUBAN (FR)
(74) Mandataire: Lavoix

(56) Documents cités:
- US-A1- 2013 057 404

## Description

L'invention concerne un procédé et un dispositif de surveillance d'au moins un ouvrant, dit ouvrant surveillé, par rapport à un dormant d'une baie (fenêtre, porte...). L'invention concerne également un capteur permettant la mise en œuvre d'un procédé selon l'invention et/ou l'obtention d'un dispositif selon l'invention. L'invention s'étend également à une baie comportant au moins un dispositif de surveillance selon l'invention.

Une baie comporte plusieurs éléments, dont au moins un ouvrant et au moins un dormant. Dans tout le texte, le terme « ouvrant » englobe tout type de panneau mobile d'une baie. Ainsi, un ouvrant peut en particulier désigner un ouvrant uniquement battant (pouvant être déplacé en rotation autour d'un axe), un ouvrant oscillo-battant (pouvant être déplacé en rotation autour l'un ou l'autre de deux axes orthogonaux l'un à l'autre) ou bien un ouvrant coulissant (pouvant être déplacé en translation le long du dormant). Le terme « dormant » désigne toute structure de la baie par rapport à laquelle un ouvrant est mobile. Il peut s'agir en particulier d'un châssis dormant et/ou d'un panneau fixe d'une baie comprenant au moins un ouvrant, plus généralement de toute structure fixe de la baie ou au voisinage de cette dernière (plafond, sol...). Le terme « réflexion » et ses dérivés appliqués à un rayonnement électromagnétique couvre non seulement la réflexion spéculaire, mais également tous les autres cas de réflexion d'un rayonnement par un solide, notamment la réflexion diffuse -en particulier la rétrodiffusion-, la réflexion totale, la rétro-réflexion, la réflexion multiple, la réflexion vitreuse, la réflexion métallique, la réflexion non linéaire...

La surveillance du déplacement d'au moins un ouvrant, c'est-à-dire la surveillance de sa position et/ou son mouvement et/ou son accélération (y compris dus à des chocs), est essentielle dans les applications domotiques d'alarme contre les intrusions et les effractions, ou de commande automatique de fermeture ou d'ouverture d'ouvrant. Il est en particulier utile de détecter la position et/ou le déplacement d'un ouvrant par rapport à au moins une position de référence -en particulier une position fermée sur un dormant.

De nombreux dispositifs domotiques connus de surveillance d'ouvrant comprennent des capteurs de position de l'ouvrant par rapport au dormant. Par exemple, certains dispositifs domotiques de surveillance pour fenêtre comprennent un capteur tel qu'un accéléromètre ou un gyroscope monté sur l'ouvrant ou incorporé dans ce dernier, notamment dans un chant de l'ouvrant. La fiabilité de ces dispositifs domotiques de surveillance dépend en partie de la sensibilité des capteurs. Ainsi, certains de ces dispositifs domotiques de surveillance comprennent des capteurs présentant une sensibilité insuffisante pour détecter des déplacements à faible vitesse de l'ouvrant. Il est donc tout à fait possible que des déplacements de l'ouvrant ne soient pas détectés. Ces dispositifs connus sont donc peu fiables. À l'inverse, l'utilisation de capteurs comprenant des composants de grande sensibilité pour remédier à ces inconvénients non seulement est coûteuse mais augmente alors les risques de faux positifs (fausses alarmes), et ne résout donc pas le problème de la fiabilité de la surveillance.

US 2013/057404 A1 décrit un exemple d'un dispositif domotique connu de surveillance d'un ouvrant.

L'invention vise à pallier ces inconvénients.

L'invention vise donc à proposer un procédé de surveillance et un dispositif de surveillance d'au moins un ouvrant, dit ouvrant surveillé, par rapport à un dormant d'une baie, adaptés pour détecter le fait que chaque ouvrant surveillé est ou non dans une position de référence et/ou tout déplacement, même faible, de chaque ouvrant surveillé, par rapport à au moins une position de référence tout en minimisant les risques de faux positifs.

L'invention vise également à proposer un tel procédé et un tel dispositif de surveillance dont la fiabilité est améliorée.

L'invention vise également à proposer un tel procédé et un tel dispositif de surveillance permettant de détecter tout déplacement de chaque ouvrant surveillé en l'absence de choc sur cet ouvrant.

L'invention vise également à proposer un tel procédé et un tel dispositif de surveillance compatibles avec tout type d'ouvrant surveillé.

L'invention vise également à proposer un tel procédé et un tel dispositif de surveillance économes en énergie.

L'invention vise en particulier à proposer un tel procédé domotique de surveillance et un tel dispositif domotique de surveillance.

Selon un autre aspect, l'invention vise plus particulièrement à proposer un capteur adapté pour la mise en œuvre d'un procédé de surveillance selon l'invention et/ou pour l'obtention d'un dispositif de surveillance selon l'invention. L'invention vise également à proposer un tel capteur pouvant être installé rapidement et simplement sur tout type d'ouvrant ou de dormant.

Selon encore un autre aspect, l'invention vise en particulier une baie présentant les mêmes avantages.

Pour ce faire, l'invention concerne un procédé de surveillance d'au moins un panneau, dit ouvrant surveillé, monté par rapport à un dormant de façon à pouvoir être déplacé par rapport au dormant, caractérisé en ce que :
- on fixe au moins un émetteur en saillie sur une face frontale d'un premier élément choisi parmi le dormant et un ouvrant surveillé, chaque émetteur étant choisi et agencé pour émettre un rayonnement, choisi parmi un rayonnement électromagnétique et un rayonnement acoustique, en direction d'un deuxième élément :
   - distinct dudit premier élément,
   - choisi parmi le dormant et un ouvrant surveillé, pour que le rayonnement émis soit au moins pour partie réfléchi par ledit deuxième élément,
- on choisit et agence au moins un récepteur pour :
   - capter un rayonnement, dit rayonnement réfléchi, issu d'au moins un émetteur fixé à un premier élément et réfléchi par un deuxième élément,
   - et fournir des signaux, dits signaux de réflexion, représentatifs d'au moins une caractéristique dudit rayonnement réfléchi,
- chaque émetteur, chaque récepteur, chaque premier élément, chaque deuxième élément étant choisis et agencés de telle sorte qu'au moins une partie desdits signaux de réflexion est modifiée lorsqu'au moins un ouvrant surveillé est déplacé au moins à partir d'au moins une position de référence prédéterminée de cet ouvrant surveillé,
- à chaque instant, les signaux de réflexion, dits signaux de réflexion instantanés, fournis par chaque récepteur sont comparés à au moins une valeur, dite valeur de référence, -notamment à une valeur de référence prédéterminée et/ou aux signaux de réflexion, dits signaux de référence, fournis par chaque récepteur lorsque chaque ouvrant surveillé est dans une position de référence-,
- au moins un signal, dit signal de déplacement, représentatif d'un déplacement d'au moins un ouvrant surveillé par rapport à une position de référence est élaboré en fonction du résultat de la comparaison entre les signaux de réflexion instantanés et chaque valeur de référence,
   ledit au moins un récepteur (26) étant fixé en saillie sur une face frontale d'un troisième élément choisi parmi le dormant et un ouvrant, et de telle sorte que les rayonnements émis par l'émetteur (24) présentent un axe (28) d'émission formant un angle α supérieur à 5° et inférieur à 90° par rapport à la face frontale dudit premier élément, et de façon que :
- l'axe (28) d'émission du rayonnement émis soit orienté vers ledit deuxième élément,
- le rayonnement émis soit réfléchi par ledit deuxième élément vers le récepteur (26).

L'invention s'étend également à un dispositif de surveillance d'au moins un ouvrant surveillé adapté pour la mise en œuvre d'un procédé de surveillance selon l'invention. L'invention concerne donc également un dispositif de surveillance d'au moins un panneau, dit ouvrant surveillé, monté par rapport à un dormant de façon à pouvoir être déplacé par rapport au dormant, caractérisé en ce qu'il comprend :
- au moins un émetteur fixé à un premier élément choisi parmi le dormant et un ouvrant, chaque émetteur étant choisi et agencé pour émettre un rayonnement, choisi parmi un rayonnement électromagnétique et un rayonnement acoustique, en direction d'un deuxième élément :
   - distinct dudit premier élément,
   - choisi parmi le dormant et un ouvrant surveillé, pour que le rayonnement émis soit au moins pour partie réfléchi par ledit deuxième élément,
- au moins un récepteur adapté et agencé pour :
   - capter un rayonnement, dit rayonnement réfléchi, issu d'au moins un émetteur fixé à un premier élément et réfléchi par un deuxième élément,
   - et fournir des signaux, dits signaux de réflexion, représentatifs d'au moins une caractéristique dudit rayonnement réfléchi,
- chaque émetteur, chaque récepteur, chaque premier élément, chaque deuxième élément étant choisis et agencés de telle sorte qu'au moins une partie desdits signaux de réflexion est modifiée lorsqu'au moins un ouvrant surveillé est déplacé au moins à partir d'au moins une position de référence prédéterminée de cet ouvrant surveillé,
- une unité de traitement des signaux de réflexion adaptée pour :
   - comparer, à chaque instant, les signaux de réflexion, dits signaux de réflexion instantanés, fournis par chaque récepteur à au moins une valeur, dite valeur de référence, -notamment à une valeur de référence prédéterminée et/ou aux signaux de réflexion, dits signaux de référence, fournis par chaque récepteur lorsque chaque ouvrant surveillé est dans une position de référence-,
   - élaborer au moins un signal, dit signal de déplacement, représentatif d'un déplacement d'au moins un ouvrant surveillé par rapport à une position de référence en fonction du résultat de la comparaison entre les signaux de réflexion instantanés et chaque valeur de référence.

L'invention s'étend également à un procédé de surveillance mis en œuvre dans un dispositif de surveillance selon l'invention.

Un procédé de surveillance et un dispositif de surveillance selon l'invention fondés sur le suivi de signaux de réflexion en temps réel par rapport à la valeur de ces signaux de réflexion pour chaque position de référence de chaque ouvrant surveillé, permettent de détecter de façon fiable et peu coûteuse tout déplacement d'au moins un ouvrant surveillé par rapport à un dormant à partir d'une position de référence ou vers une position de référence.

L'invention s'applique pour la surveillance d'une baie pouvant comprendre un seul ouvrant ou au contraire plusieurs ouvrants (par exemple une pluralité d'ouvrants coulissants), notamment à des fins domotiques, c'est-à-dire pour une alarme anti intrusion et/ou pour le contrôle à distance de chaque ouvrant.

Selon l'invention, il est possible de ne surveiller qu'un seul ouvrant d'une baie comprenant plusieurs ouvrants. Cela étant, si un ouvrant d'une baie est équipé d'un émetteur ou d'un récepteur, cet ouvrant est surveillé. De préférence, lorsqu'un procédé selon l'invention est appliqué à une baie comprenant plusieurs ouvrants, chacun des ouvrants de la baie est un ouvrant surveillé, c'est-à-dire constitue un premier élément et/ou un deuxième élément, selon la définition donnée ci-dessus de ces éléments.

Par ailleurs, selon les applications, il est possible d'utiliser un seul émetteur (fixé à l'ouvrant surveillé ou au dormant) coopérant avec un seul récepteur (fixé à l'ouvrant surveillé ou au dormant). Cela étant, rien n'empêche d'utiliser, pour surveiller un seul ouvrant surveillé, une pluralité d'émetteurs (fixés à l'ouvrant surveillé et/ou au dormant) coopérant avec un seul récepteur (fixé à l'ouvrant surveillé ou au dormant) ; ou une pluralité d'émetteurs (fixés à l'ouvrant surveillé et/ou au dormant) coopérant avec une pluralité de récepteurs (fixés à l'ouvrant surveillé et/ou au dormant) ; ou un seul émetteur (fixé à l'ouvrant surveillé ou au dormant) coopérant avec une pluralité de récepteurs (fixés à l'ouvrant surveillé et/ou au dormant).

De même, dans un procédé et un dispositif selon l'invention de surveillance d'une pluralité d'ouvrants surveillés d'une même baie (c'est-à-dire montés de façon à pouvoir être déplacés par rapport à un même dormant), il est possible, pour la surveillance de chaque ouvrant surveillé d'utiliser un seul émetteur (fixé à cet ouvrant surveillé ou au dormant) coopérant avec un seul récepteur (fixé à cet ouvrant surveillé ou au dormant). Cela étant, rien n'empêche d'utiliser, pour surveiller une pluralité d'ouvrants surveillés d'une même baie, une pluralité d'émetteurs (fixés à un ou plusieurs ouvrant(s) surveillé(s) et/ou au dormant) coopérant avec un seul récepteur (fixé à un ouvrant surveillé ou au dormant) ; ou une pluralité d'émetteurs (fixés à un ou plusieurs ouvrant(s) surveillé(s) et/ou au dormant) coopérant avec une pluralité de récepteurs (fixés à un ou plusieurs ouvrant(s) surveillé(s) et/ou au dormant) ; ou un seul émetteur (fixé à un ouvrant surveillé ou au dormant) coopérant avec une pluralité de récepteurs (fixés à un ou plusieurs ouvrant(s) surveillé(s) et/ou au dormant).

Dans un procédé de surveillance et un dispositif selon l'invention, le suivi en temps réel des signaux de réflexion instantanés peut être effectué aussi bien de façon analogique (directement à partir des signaux de réflexion instantanés délivrés par chaque récepteur, les signaux de référence étant par exemple représentés par un seuil analogique pouvant être ajusté à l'installation) que de façon numérique, ou encore de façon pour partie analogique et pour partie numérique.

Ainsi, dans certains modes de réalisation de l'invention :
- pour chaque position de référence de chaque ouvrant surveillé, des données, dites données de référence, sont mémorisées (dans une mémoire du dispositif selon l'invention) représentatives, lorsque cet ouvrant surveillé est dans cette position de référence, d'au moins une partie des signaux de réflexion susceptible d'être modifiée lorsque cet ouvrant surveillé est déplacé à partir de cette position de référence,
- des données, dites données de réflexion, représentatives des signaux de réflexion instantanés fournis par chaque récepteur sont élaborées et comparées (par ladite unité de traitement adaptée à cet effet du dispositif selon l'invention) aux données de référence,
- un signal, dit signal de déplacement, est élaboré (par ladite unité de traitement adaptée à cet effet) en fonction du résultat de la comparaison entre les données de réflexion et les données de référence.

Dans un procédé et un dispositif selon l'invention, chaque récepteur est orienté est placé de façon à pouvoir recevoir au moins une partie du rayonnement issu d'au moins un émetteur et réfléchi par au moins un deuxième élément de la baie. Dans certains modes de réalisation avantageux et selon l'invention au moins un récepteur est orienté de façon à pouvoir capter un rayonnement réfléchi selon un axe formant un angle aigu avec un axe d'émission d'un rayonnement émis par un émetteur.

En particulier, dans certains modes de réalisation de l'invention, au moins un récepteur est fixé sur ledit premier élément (sur lequel au moins un - notamment un et un seul- émetteur est fixé), ce récepteur étant adapté pour pouvoir capter un rayonnement réfléchi issu d'au moins un tel -notamment de cet- émetteur fixé sur ce premier élément. Plus particulièrement, un tel récepteur est fixé sur le premier élément à proximité immédiate d'au moins un émetteur fixé sur ce premier élément. Dans ces modes de réalisation, ledit rayonnement réfléchi capté par un tel récepteur est un rayonnement choisi parmi un rayonnement rétrodiffusé par au moins un deuxième élément et un rayonnement rétroréfléchi par au moins un deuxième élément.

En outre, dans certains modes de réalisation avantageux de l'invention, au moins un -notamment chaque- récepteur est adapté pour pouvoir fournir des signaux de réflexion représentatifs d'une quantité d'énergie dudit rayonnement réfléchi capté par ce récepteur.

Par ailleurs, avantageusement et selon l'invention, au moins un -notamment chaque- émetteur et au moins un -notamment chaque- récepteur sont choisis et agencés pour que lesdits signaux de réflexion instantanés fournis par ce récepteur soient au moins sensiblement égaux à une valeur prédéfinie -par exemple deviennent nuls (disparaissent) ou non significatifs- lorsque chaque ouvrant surveillé dont le déplacement modifie les signaux de réflexion fournis par ce récepteur est déplacé à partir d'une position de référence de cet ouvrant surveillé d'une distance supérieure à une distance dite minimale de déplacement inférieure à 5 cm -plus particulièrement inférieure à 3 cm, notamment de l'ordre de 2 cm-. En particulier, avantageusement et selon l'invention, au moins un -notamment chaque- émetteur et au moins un -notamment chaque- récepteur sont choisis et agencés pour que ladite quantité d'énergie dudit rayonnement réfléchi par ce récepteur soit nulle ou non significative lorsque chaque ouvrant surveillé dont le déplacement modifie les signaux de réflexion instantanés fournis par ce récepteur est déplacé à partir d'une position de référence de cet ouvrant surveillé d'une distance supérieure à ladite distance dite minimale de déplacement.

Plus particulièrement, au moins un -notamment chaque- émetteur et au moins un -notamment chaque- récepteur sont choisis et agencés pour que lesdits signaux de réflexion instantanés fournis par ce récepteur soient au moins sensiblement égaux à une valeur prédéfinie -par exemple deviennent nuls (disparaissent) ou non significatifs- lorsque ledit deuxième élément réfléchissant ledit rayonnement réfléchi susceptible d'être capté par ce récepteur est déplacé d'une distance supérieure à une distance, dite distance minimale de déplacement, inférieure à 10 cm -plus particulièrement inférieure à 5 cm, notamment entre 1 cm et 3 cm, par exemple de l'ordre de 2 cm -. En particulier, avantageusement et selon l'invention, au moins un -notamment chaque- émetteur et au moins un -notamment chaque- récepteur sont choisis et agencés pour que ladite quantité d'énergie dudit rayonnement réfléchi par ce récepteur soit nulle ou non significative lorsque ledit deuxième élément réfléchissant ledit rayonnement réfléchi susceptible d'être capté par ce récepteur est déplacé d'une distance supérieure à ladite distance minimale de déplacement.

Ainsi, chaque capteur formé d'un émetteur et d'un récepteur selon l'invention ne permet pas de détecter toute amplitude de déplacement de chaque ouvrant surveillé, mais est au contraire limité à la détection de la présence de chaque ouvrant surveillé, ou non, dans ou à proximité d'une position de référence. Un tel capteur d'un procédé et d'un dispositif de surveillance selon l'invention présente ainsi avantageusement une faible plage de détection de déplacement (de l'ordre de quelques centimètres) de chaque ouvrant surveillé, permettant de détecter avec fiabilité et précision le fait que chaque ouvrant surveillé est ou n'est pas dans ou à proximité d'une position de référence.

Un procédé et un dispositif selon l'invention permettent donc de détecter un déplacement d'un ouvrant surveillé grâce à une détection de la quantité d'énergie du rayonnement réfléchi captée par un récepteur.

Diverses variantes de réalisation sont envisageables en ce qui concerne l'élaboration du signal de déplacement à partir du résultat de la comparaison entre les signaux de référence et chaque valeur de référence.

En particulier, dans les modes de réalisation mentionnés ci-dessus le déplacement d'un ouvrant surveillé en dehors d'une position de référence peut être détecté (alors que cet ouvrant surveillé était préalablement dans cette position de référence), ledit signal de déplacement étant élaboré par simple détection du fait que les signaux de réflexion instantanés deviennent inférieurs à une valeur de référence prédéterminée.

À l'inverse, en variante ou en combinaison, le déplacement d'un ouvrant surveillé vers une position de référence (alors que cet ouvrant surveillé n'était préalablement pas dans une position de référence) peut être détecté, ledit signal de déplacement étant élaboré par simple détection du fait que les signaux de réflexion instantanés deviennent supérieurs à une valeur de référence prédéterminée. Le procédé et le dispositif selon l'invention peut ainsi en particulier être utiles pour vérifier que tous les ouvrants surveillés sont dans une position de référence, par exemple en position fermée, par exemple pour activer une alarme, ou simplement pour vérifier l'état d'un système domotique tel qu'un système de fermeture automatique d'ouvrants.

En variante ou en combinaison, le déplacement d'un ouvrant surveillé peut être détecté à partir de comparaisons successives des signaux de réflexion par rapport à au moins une valeur de référence prédéterminée ou à partir de comparaisons successives des signaux de réflexion entre eux.

En outre, en variante ou en combinaison, ledit signal de déplacement peut être élaboré lorsque les signaux de réflexion instantanés sont inférieurs à une valeur de référence prédéterminée durant un intervalle de temps donné.

Quoi qu'il en soit, l'élaboration d'un tel signal de déplacement par l'unité de traitement du dispositif selon l'invention est particulièrement simple et fiable.

Dans d'autres modes de réalisation conforme à l'invention, le signal de déplacement peut par exemple être élaboré lorsqu'au moins une valeur absolue de la différence entre les signaux de réflexion instantanés et des signaux de réflexion, dits signaux de référence, fournis par chaque récepteur lorsque chaque ouvrant surveillé est dans ou à proximité d'une position de référence, dépasse une valeur seuil prédéterminée. Dans certains modes de réalisation, le signal de déplacement peut être élaboré lorsque cette valeur seuil prédéterminée a été dépassée plusieurs fois, c'est-à-dire un nombre de fois supérieur à une valeur de déclenchement prédéterminée ; ou a été dépassée plusieurs fois, c'est-à-dire un nombre de fois supérieur à une valeur de déclenchement prédéterminée pendant une période de temps prédéterminée...

Un procédé et un dispositif selon l'invention ne nécessitent pas de calcul de la position exacte de l'ouvrant surveillé par rapport au dormant. En outre, dans un procédé et un dispositif selon l'invention, il n'est pas nécessaire de mesurer la distance entre chaque ouvrant surveillé et le dormant. L'invention peut donc être appliquée pour la surveillance de tout type d'ouvrant (ouvrant battant, ouvrant coulissant...). La mesure de la quantité d'énergie dudit rayonnement réfléchi capté par un récepteur permet de détecter un déplacement de l'ouvrant surveillé même si un objet est placé devant le capteur.

La quantité d'énergie du rayonnement électromagnétique réfléchi captée par le récepteur variant rapidement sur une courte distance, par exemple inférieure à 1 cm, notamment de l'ordre de 0,5 mm, un procédé et un dispositif selon l'invention permettent de détecter un déplacement de l'ouvrant de faible distance et/ou de faible amplitude (de l'ordre de quelques centimètres) à partir d'une position de référence et présente donc une grande sensibilité.

En outre, la puissance du rayonnement émis par l'émetteur peut être réglée en temps réel ou lors d'une installation du dispositif, notamment lors d'une étape de calibration de chaque capteur, en fonction de la quantité d'énergie du rayonnement réfléchi captée par le récepteur. En effet, si la quantité d'énergie du rayonnement émis ne permet pas d'obtenir une quantité d'énergie du rayonnement réfléchi captée par l'élément sensible suffisante pour différencier une position de référence, notamment une position fermée, d'une position différente de l'ouvrant surveillé, la puissance du rayonnement émis peut être augmentée en augmentant une puissance électrique d'alimentation de l'émetteur.

Dans un procédé et un dispositif selon l'invention, lesdits rayonnements émis et réfléchis peuvent être de toute nature appropriée choisie pour permettre une détection fiable, c'est-à-dire l'obtention de signaux de réflexion fiables et précis. Il convient en particulier d'éviter tout risque d'interférence. Cette nature est en particulier choisie en fonction de l'application, de la nature et des matériaux des différents éléments de la baie.

Par exemple, le rayonnement émis par l'émetteur peut être un rayonnement électromagnétique ou bien un rayonnement acoustique, notamment ultrasonore. Néanmoins, l'invention ne se limite pas à ces derniers rayonnements mais s'étend également à tout rayonnement pouvant être réfléchi sur une surface, notamment sur ledit deuxième élément, et dont une quantité d'énergie peut être mesurée.

Plus particulièrement, dans certains modes de réalisation avantageux conformes à l'invention, chaque émetteur et chaque récepteur sont choisis pour que ledit rayonnement soit un rayonnement (électromagnétique) optique, c'est-à-dire présente une longueur d'onde dans le vide comprise entre 3 mm et 10 nm. Dans certains modes de réalisation et selon l'invention, ledit rayonnement est un rayonnement (électromagnétique) infrarouge, c'est-à-dire présente une longueur d'onde dans le vide compris entre 700 nm et 1 mm. Un tel rayonnement infrarouge est en effet économe en énergie et permet une détection fiable à faible distance (de l'ordre de quelques centimètres). De préférence, ledit rayonnement électromagnétique présente une longueur d'onde dans le vide compris entre 300 nm et 1000 nm.

Un procédé et un dispositif selon l'invention peuvent être adaptés pour surveiller plusieurs positions de référence distinctes d'au moins un ouvrant surveillé d'une baie. Par exemple, il est possible de prévoir au moins un émetteur et au moins un récepteur choisis et agencés pour surveiller une première position de référence dans laquelle l'ouvrant surveillé est fermé (c'est-à-dire ferme la baie), et au moins un émetteur et au moins un récepteur choisis et agencés pour surveiller une deuxième position de référence dans laquelle ce même ouvrant surveillé est totalement ouvert.

Néanmoins, dans certains modes de réalisation préférentiels avantageux un procédé et un dispositif selon l'invention sont adaptés pour surveiller une seule position de référence de chaque ouvrant surveillé. Avantageusement et selon l'invention, cette position de référence est une position dans laquelle l'ouvrant surveillé est fermé (c'est-à-dire ferme la baie) sur le dormant. Ainsi, dans ces modes de réalisation, l'invention permet de détecter avec fiabilité, mais uniquement, le fait que chaque ouvrant surveillé est ou non fermé sur le dormant.

En variante, une position de référence peut être une position dans laquelle l'ouvrant surveillé est entrouvert et de préférence maintenu dans cette position, de façon à permettre une ventilation naturelle à travers un entrebâillement de l'ouvrant. Lorsque l'ouvrant est entrouvert, il est décalé par rapport à une position de fermeture complète sur une distance comprise entre 0,1 cm et 5 cm par rapport au dormant. Dans certains modes de réalisation avantageux, la position de référence d'un ouvrant surveillé est définie au moment d'une activation de la surveillance de l'ouvrant surveillé par un utilisateur du dispositif selon l'invention.

Dans certains modes de réalisation avantageux et selon l'invention, un déplacement de l'ouvrant vers une position de fermeture de l'ouvrant complète ou vers une position d'ouverture de l'ouvrant au-delà de la position entrouverte de l'ouvrant peut être détecté en comparant les signaux de réflexion aux valeurs de référence prédéterminées (les signaux de réflexion se rapprochent et s'éloignent d'une ou plusieurs valeurs de référence en fonction de l'ouverture ou de la fermeture de l'ouvrant). Dans certains modes de réalisation avantageux et selon l'invention, il est également possible de distinguer les mouvements de l'ouvrant vers la position de fermeture de ceux depuis la position de fermeture. En outre, de préférence et selon l'invention, au moins un -notamment chaque- émetteur et au moins un -notamment chaque- récepteur et ledit deuxième élément sont choisis et agencés pour que le récepteur puisse capter uniquement un rayonnement réfléchi par ce deuxième élément si ce deuxième élément est placé à moins de 10 cm -plus particulièrement à moins de 5 cm, notamment entre 1 cm et 3 cm, par exemple de l'ordre de 2 cm- de ce récepteur.

Ainsi, l'émetteur et le récepteur sont placés de façon à être proches d'une portion dudit deuxième élément vers laquelle le rayonnement émis est dirigé lorsque l'ouvrant est en position de référence-notamment en position fermée-. De préférence, la distance entre l'émetteur et ledit deuxième élément est comprise entre 1 cm et 8 cm, et la distance entre le récepteur et ledit deuxième élément est comprise entre 1 cm et 8 cm.

Dans certains modes de réalisation avantageux d'un procédé et d'un dispositif selon l'invention, au moins un -notamment chaque- émetteur présente un angle solide d'ouverture d'émission dudit rayonnement émis large, c'est-à-dire par exemple compris entre 6×10⁻³ stéradian et 5,2 stéradians.

Par ailleurs, de préférence, lorsque le rayonnement émis est un rayonnement électromagnétique, ledit deuxième élément sur lequel le rayonnement électromagnétique émis par l'émetteur est dirigé présente un coefficient de réflexion suffisant pour que le rayonnement électromagnétique émis puisse être suffisamment réfléchi pour pouvoir être capté par un récepteur. Dans certains modes de réalisation avantageux de l'invention, ledit deuxième élément présente un coefficient de réflexion compris entre 0,2 et 1, plus particulièrement supérieur à 0,4. Par exemple, ledit deuxième élément peut présenter un revêtement brillant (laqué), métallique.
- Dans un procédé et un dispositif selon l'invention, on peut intégrer un émetteur et/ou un récepteur à l'intérieur d'un châssis d'un ouvrant surveillé ou du dormant.

Par exemple, l'émetteur est fixé à une distance d'un bord périphérique de la face frontale dudit premier élément comprise entre 0,1 cm à 10 cm, notamment de l'ordre de 5 cm, et le récepteur est fixé à une distance d'un bord périphérique de la face frontale dudit troisième élément comprise entre 0,1 cm à 10 cm, notamment de l'ordre de 5 cm.

Un émetteur et un récepteur forment un capteur de surveillance selon l'invention d'un ouvrant surveillé et partagent de préférence un boîtier commun.

Un tel capteur selon l'invention est adapté pour être installé sur tout type d'ouvrant (fenêtre, porte, volets...) ou au dormant associé à cet ouvrant pour détecter le fait que cet ouvrant est ou non dans ou à proximité d'une position de référence.

Ainsi, dans certains modes de réalisation, le capteur est monté à l'ouvrant surveillé, l'émetteur présentant un axe d'émission -notamment un axe optique- du rayonnement émis orienté vers le dormant. Dans d'autres modes de réalisation, le capteur est monté au dormant, l'émetteur présentant un axe d'émission - notamment un axe optique- du rayonnement émis orienté vers l'ouvrant surveillé.

Par ailleurs, dans certains modes de réalisation avantageux un capteur selon l'invention est adapté pour pouvoir être fixé sur un plan, dit plan de fixation, et comprend :
- un émetteur de rayonnement,
- un récepteur adapté pour capter un rayonnement incident sur ce récepteur, l'émetteur étant orienté de sorte que le rayonnement électromagnétique émis par cet émetteur présente un axe d'émission -notamment un axe optique- orienté vers le plan de fixation et formant un angle α supérieur à 5° et inférieur à 90° par rapport à ce plan de fixation. En particulier, l'angle α est supérieur à 8°, plus particulièrement supérieur à 10°, plus particulièrement supérieur à 15°, plus particulièrement supérieur à 20°, notamment de l'ordre de 45°.

En outre, dans un tel capteur le récepteur est avantageusement orienté de façon à ce qu'il puisse capter un rayonnement réfléchi présentant un axe de réception -notamment un axe optique- formant un angle avec le plan de fixation supérieur à 5° et inférieur à 90°, notamment supérieur à 8°, plus particulièrement supérieur à 10°, plus particulièrement supérieur à 15°, plus particulièrement supérieur à 20°, notamment de l'ordre de 45°.

Un tel capteur permet donc de diriger le rayonnement émis vers le deuxième élément présentant une surface sécante à l'axe de réception du récepteur, notamment parallèle au plan de fixation ou comprise dans le plan de fixation.

Lorsque le capteur est monté en saillie de la face frontale du premier élément, l'orientation de l'émetteur permet de diriger le rayonnement émis vers ledit deuxième élément.

Par exemple, lorsque le capteur est monté sur l'ouvrant, l'émetteur est orienté avec son axe d'émission dirigé vers une portion de châssis du dormant portant l'ouvrant.

Dans certains modes de réalisation, notamment lorsque le rayonnement émis est un rayonnement électromagnétique, le dispositif de surveillance -notamment le capteur- comprend un boîtier comprenant une paroi délimitant une enceinte du boîtier dans laquelle sont placés au moins un émetteur et au moins un récepteur, la paroi présentant au moins une fenêtre transparente audit rayonnement électromagnétique émis -notamment une ouverture- permettant le passage de ce rayonnement électromagnétique émis vers l'extérieur de l'enceinte du boîtier ; et au moins une fenêtre transparente audit rayonnement électromagnétique réfléchi - notamment une ouverture- permettant le passage dudit rayonnement électromagnétique réfléchi depuis l'extérieur de l'enceinte du boîtier vers l'intérieur de l'enceinte du boîtier. L'installation d'un tel capteur est simple, rapide et ne nécessite aucun usinage complexe supplémentaire de l'ouvrant surveillé.

Ledit plan de fixation est défini par une face de fixation du boîtier. En particulier, dans certains modes de réalisation avantageux, cette face de fixation du boîtier est plane. Néanmoins, rien n'empêche de prévoir une face de fixation gauche par rapport au plan de fixation, ledit plan de fixation passant alors par au moins trois points de fixation de la face de fixation du boîtier.

Ainsi, dans certains modes de réalisation, un capteur selon l'invention est monté sur un ouvrant surveillé et l'axe d'émission du rayonnement émis est orienté vers le dormant. En variante ou en combinaison, un capteur est monté sur le dormant et l'axe d'émission du rayonnement émis est orienté vers au moins un ouvrant surveillé.

Par exemple, un émetteur et un récepteur peuvent être placés sur une bordure longitudinale de la face frontale d'un ouvrant surveillé la plus proche d'un chant de l'ouvrant surveillé.

En particulier, un émetteur et un récepteur peuvent être placés sur une bordure longitudinale de la face frontale de l'ouvrant surveillé la plus proche, d'un chant, dit chant de fermeture, comprenant des moyens de fermeture et/ou de verrouillage de l'ouvrant surveillé (notamment un pêne de l'ouvrant surveillé). Ledit deuxième élément sur lequel le rayonnement émis par l'émetteur est dirigé est alors une portion du dormant proche du chant de fermeture de l'ouvrant surveillé lorsque l'ouvrant surveillé est fermé. Cette variante permet en particulier de détecter une position de référence fermée de l'ouvrant surveillé. Le déplacement de l'ouvrant surveillé à partir d'une position de référence fermée entraîne alors une diminution de la valeur des signaux de réflexion instantanés. En effet, le rayonnement émis par l'émetteur, l'ouvrant surveillé s'éloignant du dormant lors du déplacement de l'ouvrant surveillé dans le sens de son ouverture à partir de sa position de référence fermée, n'est plus dirigé vers la portion du dormant vers laquelle ce rayonnement est dirigé lorsque l'ouvrant est en position de référence fermée.

Dans le cas d'un ouvrant battant (uniquement battant ou oscillo-battant), un émetteur et un récepteur peuvent également être placés sur une bordure longitudinale de la face frontale de l'ouvrant surveillé la plus proche d'un chant opposé au chant de l'ouvrant comprenant des moyens de fermeture et/ou de verrouillage de l'ouvrant surveillé, c'est-à-dire la plus proche d'un chant le plus proche d'un axe de rotation de l'ouvrant surveillé. Cette variante permet en particulier de détecter une position de référence ouverte de l'ouvrant surveillé. Ledit deuxième élément sur lequel le rayonnement émis par l'émetteur est dirigé est alors une portion du dormant proche de l'axe de rotation de l'ouvrant surveillé. Le déplacement de l'ouvrant surveillé dans le sens de sa fermeture à partir de la position de référence ouverte entraîne une diminution de la valeur des signaux de réflexion instantanés. En effet, le rayonnement émis par l'émetteur, n'est plus dirigé vers la portion du dormant vers laquelle ce rayonnement est dirigé lorsque l'ouvrant est en position de référence ouverte, l'ouvrant surveillé s'éloignant du dormant lors du déplacement de l'ouvrant surveillé à partir de sa position de référence ouverte.

Un émetteur et un récepteur peuvent également être placés sur une bordure transversale en-haut de la face frontale de l'ouvrant surveillé. En particulier, la bordure sur laquelle un émetteur et un récepteur sont placés présente une largeur inférieure à 10 cm, notamment de l'ordre de 2 cm. Ledit deuxième élément sur lequel le rayonnement émis par l'émetteur est dirigé est alors une portion du dormant s'étendant au-dessus de l'ouvrant surveillé. Là encore, cette variante permet de détecter une position de référence fermée de l'ouvrant surveillé.

Par ailleurs, lorsque le capteur est fixé au dormant et en saillie de celui-ci, l'émetteur et le récepteur sont placés sur une bordure longitudinale de la face frontale du dormant, notamment sur le châssis du dormant encadrant l'ouvrant surveillé.

Un capteur selon l'invention peut être monté facilement sur un ouvrant ou sur un dormant sans nécessiter un usinage spécifique. Un capteur selon l'invention est donc adapté pour être monté rapidement sur un élément quelconque d'une baie pour la surveillance de tout type d'ouvrant de la baie.

Par ailleurs, dans certains modes de réalisation avantageux un dispositif selon l'invention comporte au moins un accéléromètre. En particulier, avantageusement et selon l'invention au moins un accéléromètre est fixé à au moins un élément de la baie choisie parmi le dormant et un ouvrant surveillé, cet accéléromètre étant adapté pour pouvoir fournir des signaux, dits signaux accélérométriques, représentatifs d'une accélération d'au moins un ouvrant surveillé par rapport au dormant. Un tel accéléromètre peut être fixé sur un ouvrant, notamment sur un ouvrant surveillé. Un tel accéléromètre peut aussi être fixé, en variante ou en combinaison, au dormant (et est alors adapté pour pouvoir détecter des chocs impartis sur le dormant, notamment par la fermeture d'un ouvrant et/ou lors d'une tentative d'effraction).

Un tel accéléromètre présente de nombreux avantages en combinaison avec un capteur selon l'invention. En particulier, un procédé et un dispositif de surveillance domotique d'une baie comprenant en combinaison au moins un accéléromètre, au moins un émetteur de rayonnement choisi parmi un rayonnement électromagnétique et un rayonnement acoustique et au moins un récepteur d'un tel rayonnement selon l'invention sont particulièrement fiables, simples, économes en énergie.

En particulier, un tel accéléromètre peut être utilisé pour déclencher la détection desdits signaux de réflexion instantanés et/ou leur comparaison à chaque valeur de référence. Par exemple, les signaux de réflexion instantanés peuvent être élaborés périodiquement selon une fréquence qui peut être augmentée lorsque des signaux fournis par un accéléromètre représentatifs d'une accélération d'au moins un ouvrant surveillé sont supérieurs à un seuil, dit seuil d'accélération.

Ainsi, lorsque les signaux fournis par un tel accéléromètre sont inférieurs audit seuil d'accélération, la fréquence des mesures des signaux de réflexion instantanés peut être minimisée afin de réduire la consommation d'énergie du dispositif selon l'invention (par exemple, dans le cas d'un dispositif d'alarme, la probabilité qu'une intrusion ait lieu sans aucune accélération de l'ouvrant est faible).

En variante ou en combinaison, les signaux accélérométriques fournis par au moins un tel accéléromètre peuvent être utilisés en combinaison avec la comparaison des signaux de réflexion instantanés à chaque valeur de référence pour élaborer le signal de déplacement. Par exemple, le fait que les signaux accélérométriques fournis par un tel accéléromètre soient supérieurs à un seuil prédéterminé (une fois, ou plusieurs fois successivement, ou plusieurs fois successivement dans une période de temps), peut être une condition nécessaire à l'élaboration d'un signal de déplacement.

Par ailleurs, dans certains modes de réalisation avantageux un dispositif selon l'invention comporte au moins un magnétomètre. En particulier, au moins un magnétomètre est fixé à un ouvrant surveillé battant et adapté pour pouvoir fournir des signaux représentatifs d'une orientation de cet ouvrant surveillé par rapport au dormant. Les signaux délivrés par un tel magnétomètre peuvent être utilisés en combinaison avec au moins un émetteur de rayonnement choisi parmi un rayonnement électromagnétique et un rayonnement acoustique et au moins un récepteur d'un tel rayonnement selon l'invention pour confirmer le fait qu'au moins un ouvrant surveillé a été déplacé par rapport à au moins une position de référence de ce dernier. Par exemple, un tel magnétomètre peut être utilisé pour identifier une position de référence d'au moins un ouvrant surveillé battant à partir de laquelle un déplacement de cet ouvrant surveillé battant est détecté par un capteur selon l'invention.

De préférence, l'accéléromètre et/ou le magnétomètre peu(ven)t être endormi(s) lorsqu'aucune variation des signaux de réflexion n'est détectée et/ou lorsque les signaux de réflexion sont égaux à une valeur de référence relative à la position de l'ouvrant à surveiller.

L'accéléromètre et/ou le magnétomètre peu(ven)t être réveillé(s) lorsque les signaux de réflexion atteignent une valeur prédéterminée et/ou lorsqu'une variation dans les signaux de réflexion est détectée.

Cela permet non seulement d'économiser la dépense énergétique du dispositif de surveillance mais aussi de ne pas réagir à des signaux accélérométriques dus par exemple à des vibrations ou à des chocs extérieurs qui ne sont pas liés à une ouverture de l'ouvrant.

Le dispositif de surveillance comprend au moins une alimentation électrique -c'est-à-dire une source d'énergie électrique autonome et/ou un circuit d'alimentation électrique-. Par exemple, au moins une alimentation électrique est placée dans l'enceinte du boîtier afin d'alimenter en énergie électrique l'émetteur, le récepteur, l'unité de traitement, l'accéléromètre si celui-ci est monté sur l'ouvrant et le magnétomètre. Une autre alimentation électrique peut être montée sur le dormant afin d'alimenter l'accéléromètre si celui-ci est monté sur le dormant. Dans ce dernier cas, l'accéléromètre et l'alimentation électrique peuvent être placés dans une enceinte d'un deuxième boîtier. Chaque alimentation électrique peut par exemple être choisie parmi au moins un accumulateur électrique et au moins une pile.

Dans certains modes de réalisation avantageux d'un procédé selon l'invention, le signal de déplacement est transmis à une centrale de traitement adaptée pour informer l'utilisateur d'un tel déplacement.

Par exemple, un procédé et un dispositif selon l'invention peuvent être utilisés dans un système de contrôle d'accès à un espace clos tel qu'un bâtiment, notamment dans un système d'alarme. Le signal de déplacement peut ainsi être utilisé pour déclencher une alarme.

Par ailleurs, un dispositif selon l'invention -notamment un capteur selon l'invention- peut comprendre des moyens de communication sans fils tels que des moyens de communication par ondes radios, par exemple en utilisant des protocoles Wi-Fi®, ou Bluetooth® ou des protocoles propriétaires, par ondes ultrasonores ou par ondes optiques. Ainsi, le signal de déplacement peut être transmis à une centrale de traitement permettant de communiquer avec l'utilisateur -notamment de déclencher une alarme-.

L'invention s'étend également à un capteur adapté pour la mise en œuvre d'un procédé de surveillance selon l'invention et/ou à un capteur d'un dispositif de surveillance selon l'invention.

L'invention s'étend également à une baie comprenant un dormant et au moins un ouvrant monté par rapport à un dormant de façon à pouvoir être déplacé par rapport au dormant, et un dispositif de surveillance d'au moins un ouvrant, dit ouvrant surveillé, caractérisée en ce qu'elle comporte au moins un dispositif de surveillance selon l'invention.

L'invention concerne également un procédé de surveillance, un dispositif de surveillance, une baie et un capteur caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma en élévation de deux ouvrants coulissants en position fermée et portant chacun un capteur selon l'invention,
- la figure 2 est un schéma en élévation de deux ouvrants coulissants portant chacun un capteur selon l'invention, un ouvrant coulissant étant en position ouverte et l'autre ouvrant coulissant étant en position fermée,
- la figure 3 est un schéma en élévation d'un ouvrant battant portant un capteur selon l'invention,
- la figure 4 est un schéma en vue de côté d'un ouvrant portant un capteur selon l'invention,
- la figure 5 est un graphique présentant la quantité d'énergie, en ordonnée, des rayonnements électromagnétiques réfléchis captée par l'élément sensible d'un capteur selon l'invention en fonction de la distance, en abscisse, à laquelle le capteur est placé par rapport à la portion du dormant sur laquelle les rayonnements électromagnétiques émis par l'émetteur du capteur sont réfléchis,
- la figure 6 est un graphique présentant un exemple de détection d'un déplacement de l'ouvrant à partir d'un dispositif domotique selon l'invention, le temps étant présenté en abscisse et la quantité d'énergie des rayonnements électromagnétiques réfléchis captée par l'élément sensible étant présentée en ordonnée.

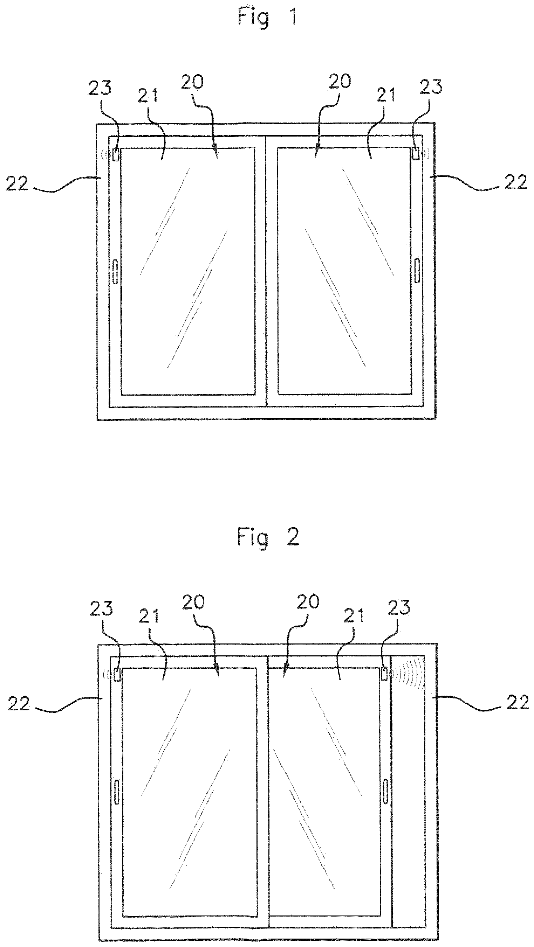

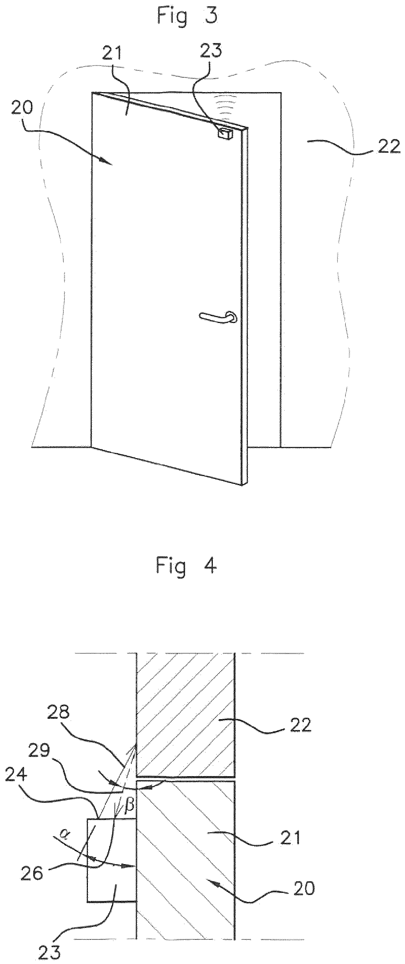

Les figures 1 et 2 représentent une baie selon l'invention comprenant deux ouvrants 21 et un dormant 22, équipée d'un dispositif 20 selon l'invention de surveillance des ouvrants 21, dits ouvrants 21 surveillés. Ce dispositif 20 domotique comprend un capteur 23 selon l'invention associée à chaque ouvrant 21 surveillé. Par exemple, un tel ouvrant surveillé autorise ou empêche un accès à un espace clos à protéger. Dans le mode de réalisation représenté aux figures 1 et 2, chaque ouvrant 21 est un ouvrant coulissant. Néanmoins, l'invention peut être appliquée à tout type d'ouvrant. Par exemple, un capteur 23 peut également être placé sur un ouvrant battant tel que représenté à la figure 3. L'ouvrant peut être une porte ou bien une fenêtre par exemple.

Chaque capteur 23 comprend un émetteur 24 et un récepteur 26 de rayonnement électromagnétique. En variante, au moins un capteur 23 peut comprendre un émetteur et un récepteur de rayonnement acoustique, notamment d'ondes ultrasonores.

Avantageusement, ce rayonnement électromagnétique est un rayonnement optique, plus particulièrement infrarouge -notamment de longueur d'onde comprise entre 300nm et 1000nm-. Néanmoins, en variante ou en combinaison, rien n'empêche de prévoir que l'émetteur 24 émette des rayonnements électromagnétiques de longueur d'onde autre qu'un infrarouge. Le rayonnement électromagnétique peut en particulier être un rayonnement optique émis dans le spectre visible. L'émetteur 24 peut être par exemple une diode électroluminescente. De préférence, l'émetteur 24 est adapté pour émettre un rayonnement électromagnétique présentant un angle solide d'ouverture supérieur à 6×10⁻³ stéradian, notamment compris entre 6×10⁻³ stéradian et 5,2 stéradians. Néanmoins, rien n'empêche d'utiliser un émetteur 24 pouvant émettre un rayonnement électromagnétique présentant un angle solide d'ouverture inférieur à 6×10⁻³ stéradian, ou supérieur à 5,2 stéradians, voire diffus (isotrope).

En outre, le récepteur 26 du capteur 23 permet de mesurer une quantité d'énergie d'un rayonnement électromagnétique incident sur ce dernier. En outre, le récepteur 26 est adapté pour émettre des signaux, dits signaux de réflexion, représentatifs de la quantité d'énergie du rayonnement électromagnétique capté. Le récepteur 26 peut être choisi notamment dans le groupe formé des photorécepteurs et des phototransistors.

Lorsque les signaux de réflexion sont des signaux analogiques, le dispositif 20 domotique comprend également avantageusement au moins une unité de traitement, non représentée, permettant de convertir les signaux de réflexion en données numériques, dites données de réflexion. Cette unité de traitement est également adaptée pour comparer les données de réflexion par rapport à des données de référence, de valeurs prédéterminées et/ou élaborées à partir de signaux de réflexion obtenus lorsque l'ouvrant surveillé est dans ou à proximité d'une position de référence.

La position de référence peut être une position fermée de l'ouvrant par rapport au dormant ou une position entrouverte ou autre, par exemple une position de ventilation. Plus particulièrement, une position entrouverte de l'ouvrant est obtenue lorsque l'ouvrant est ouvert sur une distance comprise entre 0,1cm et 10 cm par rapport au dormant. Cette unité de traitement est également adaptée pour élaborer un signal de déplacement, en fonction du résultat de la comparaison des données de réflexion par rapport aux données de référence.

Cette unité de traitement comprend au moins un microprocesseur et/ou au moins un microcontrôleur. Un dispositif 20 domotique de surveillance selon l'invention peut comporter une unique unité de traitement, ou au contraire une pluralité d'unités de traitement.

Au moins une première unité de traitement peut alors être adaptée pour élaborer les données de référence et les données de réflexion à partir des signaux de réflexion instantanés d'au moins un capteur du dispositif domotique. Cette première unité de traitement peut être intégrée au récepteur 26 de chaque capteur du dispositif domotique. Cette première unité de traitement peut comporter notamment un convertisseur analogique numérique et un microcontrôleur.

Au moins une deuxième unité de traitement peut être adaptée pour comparer les données de réflexion élaborées par ladite au moins une première unité de traitement par rapport aux données de référence enregistrées dans une mémoire de cette deuxième unité de traitement et élaborer un signal de déplacement, en fonction du résultat de la comparaison des données de réflexion par rapport aux données de référence. Cette deuxième unité de traitement peut être dissociée de l'émetteur 24 et du récepteur 26 de chaque capteur 23 et être reliée à ladite première unité de traitement du récepteur 26 de chaque capteur 23 par une liaison filaire ou sans fil. Cette deuxième unité de traitement comprend par exemple un microprocesseur et/ou un microcontrôleur.

L'émetteur 24 et le récepteur 26 peuvent être intégrés dans un même composant électronique. Par exemple, ce composant électronique est un composant électronique tel que ceux fabriqués par VISHAY sous la référence VCNL3020 ou VCNL4010 ou bien tel que celui fabriqué par STMicroelectronics sous la référence VL6180X.

Par ailleurs, un capteur 23 selon l'invention peut comporter un seul émetteur et un seul récepteur, ou, en variante, plusieurs émetteurs 24 et/ou plusieurs récepteurs 26.

Chaque capteur 23 comprend un boîtier 37 présentant une paroi délimitant une enceinte du boîtier 37. L'enceinte du boîtier 37 comprend l'émetteur 24, le récepteur 26 et au moins une unité de traitement intégrée dans le capteur 23. L'émetteur 24 et le récepteur 26 sont fixés au boîtier 37 du capteur 23.

Le boîtier 37 est avantageusement placé en saillie de l'ouvrant. Plus particulièrement, le boîtier 37 présente une face de fixation pouvant être placée et fixée en contact d'une face frontale de l'ouvrant 21. Ainsi, un capteur 23 selon l'invention peut facilement être monté sur un ouvrant pour former un dispositif 20 domotique selon l'invention.

Dans les modes de réalisation représentés, le capteur 23 est placé sur une bordure de la face frontale de l'ouvrant 21 surveillé. Dans l'exemple des figures 1 et 2, le capteur 23 peut être placé sur une bordure longitudinale de la face frontale de l'ouvrant 21 la plus proche d'un chant, dit chant de fermeture, de l'ouvrant 21, comprenant les moyens de fermeture de l'ouvrant (notamment un pêne de l'ouvrant 21). En variante non représentée, notamment dans le cas d'un ouvrant 21 battant, le capteur 23 peut être placé sur une bordure longitudinale de la face frontale de l'ouvrant 21 la plus proche d'un chant opposé au chant de fermeture de l'ouvrant 21, c'est-à-dire le chant le plus proche d'un axe de rotation de l'ouvrant 21. Le capteur 23 peut également être placé sur une bordure transversale en-haut de la face frontale de l'ouvrant 21 comme représenté dans l'exemple de la figure 3. De préférence, la bordure sur laquelle le capteur 23 est placé présente une largeur inférieure à 10 cm, notamment de l'ordre de 2 cm.

Le boîtier 37 du capteur 23 présente au moins une fenêtre permettant l'émission du rayonnement électromagnétique émis par l'émetteur 24 vers l'extérieur de l'enceinte du boîtier 37 et la réception par le récepteur 26 du rayonnement électromagnétique provenant de l'extérieur de l'enceinte du boîtier 37.

Le capteur 23 comprend une alimentation électrique, c'est-à-dire une source d'énergie électrique et/ou un circuit d'alimentation électrique, permettant notamment d'alimenter l'émetteur 24, le récepteur 26 et l'unité de traitement en énergie électrique. L'alimentation électrique peut comporter une source d'énergie électrique autonome intégrée dans le boîtier 37 du capteur 23. Cette source d'énergie électrique peut être par exemple une batterie d'accumulateurs électriques ou bien au moins une pile.

L'émetteur 24 est positionné de telle sorte qu'au moins une partie du rayonnement électromagnétique émis soit dirigé vers une face frontale du dormant 22 parallèle à la face frontale de l'ouvrant 21 surveillés lorsque l'ouvrant est en position fermée. En particulier, le rayonnement électromagnétique émis peut être dirigé vers une portion de la face frontale du dormant 22, telle qu'un encadrement de l'ouvrant ou un mur portant l'ouvrant, comme représenté figure 4. Avantageusement, le rayonnement électromagnétique émis présente un axe 28 d'émission -notamment un axe optique- formant avec la face frontale de l'ouvrant 21 surveillé sur laquelle le capteur 23 est fixé un angle α supérieur à 5° et inférieur à 90°, notamment supérieur à 8°, plus particulièrement supérieur à 10°, plus particulièrement supérieur à 15°, plus particulièrement supérieur à 20°, notamment de l'ordre de 45°.

Le rayonnement électromagnétique émis par l'émetteur 24 est réfléchi, notamment rétrodiffusé, par une portion du dormant 22 vers laquelle il est dirigé. Selon l'invention, le récepteur 26 est orienté de façon à capter au moins une quantité 30 d'énergie du rayonnement électromagnétique réfléchi orienté vers le récepteur 26 lorsque l'ouvrant 21 surveillé est en position de référence. Plus particulièrement, le récepteur 26 est adapté pour fournir des signaux, dits signaux de réflexion, représentatifs d'une quantité d'énergie du rayonnement électromagnétique réfléchi captée par ce récepteur 26. Le récepteur 26 est orienté de façon à ce qu'il puisse capter un rayonnement électromagnétique réfléchi présentant un axe de réception -notamment un axe optique- formant un angle β avec la face frontale de l'ouvrant sur laquelle le capteur 23 est fixé supérieur à 5° et inférieur à 90°, notamment supérieur à 8°, plus particulièrement supérieur à 10°, plus particulièrement supérieur à 15°, plus particulièrement supérieur à 20°, notamment de l'ordre de 45°.

On choisit de préférence une portion du dormant 22 sur laquelle le rayonnement électromagnétique émis est dirigé présentant un fort coefficient de réflexion -notamment un fort coefficient de rétrodiffusion- de façon à optimiser la quantité d'énergie du rayonnement électromagnétique réfléchi captée par le récepteur 26. De préférence, cette portion du dormant 22 présente un coefficient de réflexion compris entre 0,2 et 1, plus particulièrement supérieur à 0,4. Avantageusement, cette portion est plane et s'étend dans le prolongement de l'ouvrant lorsque celui-ci est en position fermée. Par exemple, ladite portion du dormant 22 peut présenter un revêtement laqué, une surface métallique ou bien une surface bois ou plastique, intégrée ou ajoutée au dormant 22. En outre, cette portion du dormant 22 peut présenter une forme quelconque dès lors qu'au moins une partie du rayonnement électromagnétique est réfléchie vers le récepteur 26.

On choisit plus particulièrement un récepteur 26 pouvant uniquement capter un rayonnement électromagnétique réfléchi par une portion du dormant 22 placée à moins de 10 cm -plus particulièrement à moins de 5 cm, plus particulièrement à moins de 3 cm- du récepteur 26.

Plus particulièrement, lorsque le capteur 23 est placé sur une bordure longitudinale la plus proche d'un chant de fermeture de l'ouvrant 21, la portion du dormant 22 sur laquelle le rayonnement électromagnétique émis par l'émetteur 24 est dirigé est une portion du dormant 22 proche du chant de fermeture de l'ouvrant 21 lorsque l'ouvrant 21 est fermé. Lorsque le capteur 23 est placé sur une bordure longitudinale la plus proche du chant de l'ouvrant 21 le plus proche de l'axe de rotation d'un ouvrant 21 battant ou oscillo-battant, la portion du dormant 22 sur laquelle le rayonnement électromagnétique émis par l'émetteur 24 est dirigé est une portion du dormant 22 proche de l'axe de rotation de l'ouvrant 21. En outre, lorsque le capteur 23 est placé sur une bordure transversale en-haut de la face frontale de l'ouvrant 21, la portion du dormant sur laquelle le rayonnement électromagnétique émis par l'émetteur 24 est dirigé est une portion du dormant 22 au-dessus de l'ouvrant 21.

En outre, le rayonnement électromagnétique émis présente une puissance dépendant en particulier de la puissance électrique -notamment de l'intensité du courant- d'alimentation de l'émetteur 24. La quantité d'énergie du rayonnement électromagnétique réfléchi captée par le récepteur 26 dépend en partie de la puissance du rayonnement électromagnétique émis. Cette puissance du rayonnement électromagnétique émis peut être augmentée en augmentant l'intensité du courant électrique d'alimentation de l'émetteur 24 pour augmenter la quantité d'énergie du rayonnement électromagnétique captée par le récepteur 26. Par exemple, lorsque l'émetteur 24 est un émetteur tel que ceux compris dans des composants électroniques fabriqués par VISHAY sous la référence VCNL3020 et VCNL4010 ou bien celui fabriqué par STMicroelectronics sous la référence VL6180X, il peut être alimenté par un courant électrique d'alimentation d'intensité comprise entre 10mA et 200mA.

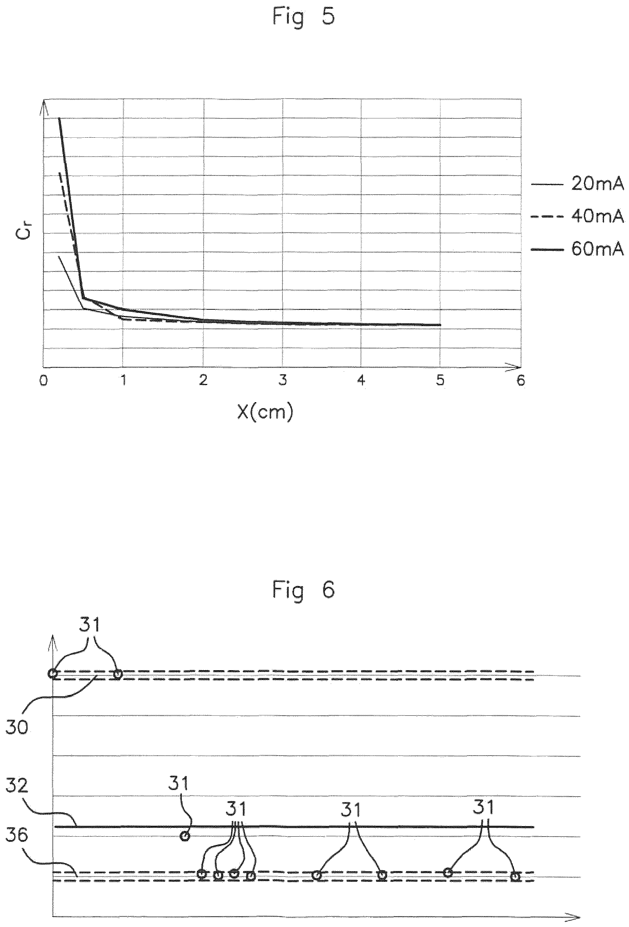

La figure 5 représente un exemple de quantité d'énergie de rayonnement électromagnétique réfléchi captée par un récepteur 26 tel que ceux compris dans des composants électroniques fabriqués par VISHAY sous la référence VCNL3020 ou VCNL4010 ou bien celui fabriqué par STMicroelectronics sous la référence VL6180X selon la distance entre le récepteur 26 et la portion du dormant 22 pour des intensités différentes (20mA, 40mA et 60mA) du courant électrique fourni à l'émetteur 24. En particulier, la variation de la quantité d'énergie du rayonnement électromagnétique réfléchi est plus importante entre 0,2cm et 1cm de distance entre l'émetteur 24 et la portion réfléchissante du dormant 22.

L'unité de traitement du capteur 23 permet de détecter un déplacement de l'ouvrant sur lequel le capteur 23 est placé par rapport au dormant 22 à partir des données de réflexion délivrées par le récepteur 26 ou élaborées par cette unité de traitement à partir des signaux de réflexion instantanés délivrés par le récepteur 26. En particulier, l'unité de traitement du capteur 23 permet de détecter un déplacement de l'ouvrant à partir d'une position de référence de l'ouvrant.

Afin de détecter un déplacement de l'ouvrant, l'unité de traitement est programmée pour comparer les données de réflexion à des données de référence qui peuvent être des données de référence de valeur prédéterminée ou des données représentatives des signaux de réflexion lorsque l'ouvrant est dans une position de référence par rapport au dormant 22. En particulier, l'unité de traitement compare les données de réflexion aux données de référence dès que l'unité de traitement du dispositif 20 domotique reçoit un ordre de surveillance de l'ouvrant. Cet ordre de surveillance peut être transmis à l'unité de traitement par l'utilisateur ou bien par des moyens de détection de présence de l'utilisateur dans l'espace clos à protéger. Ces moyens de détection de présence de l'utilisateur peuvent être par exemple un circuit RFID d'identification par radiofréquence et un lecteur RFID. Ces moyens de détection de présence peuvent être placés dans l'espace clos à protéger ou en-dehors de cet espace clos. En particulier, ces moyens de détection de présence peuvent être placés sur le dormant 22 à proximité de l'ouvrant 21 ou sur l'ouvrant 21.

Des données de référence peuvent être élaborées lors d'une étape de calibration et enregistrées dans une mémoire du capteur 23. Elles peuvent faire l'objet d'un ajustement au cours d'utilisation du dispositif selon l'invention, soit sur commande manuelle d'un utilisateur, soit automatiquement selon un protocole d'auto adaptation. Par exemple, une valeur moyenne de la quantité d'énergie du rayonnement électromagnétique réfléchi mesurée sur une pluralité de mesures successives sans détection de déplacement de l'ouvrant peut être utilisée en tant que valeur de référence.

Après avoir comparé les données de réflexion aux données de référence, l'unité de traitement est programmée pour élaborer au moins un signal, dit signal de déplacement, en fonction du résultat de la comparaison entre les données de réflexion.

Un tel signal de déplacement peut être un signal de déplacement, dit signal de déplacement positif, représentatif d'un retour d'un ouvrant surveillé vers une position de référence. Dans ce cas, le signal de déplacement est élaboré lorsque ladite comparaison indique que les signaux de réflexion instantanés ou les données de réflexion prennent une valeur qui correspond à une valeur de référence correspondant au fait que l'ouvrant surveillé est en position de référence.

L'unité de traitement peut ainsi être programmée pour élaborer un signal de déplacement positif lorsqu'au moins une valeur absolue de la différence entre les données de réflexion et des données de référence fournies par le récepteur 26 lorsque l'ouvrant surveillé est dans une position de référence, est inférieure à une valeur seuil prédéterminée. Cette valeur seuil prédéterminée peut être un pourcentage des dites données de référence.

Par exemple, un signal de déplacement positif est élaboré lorsque |R-S|/R < k, où S est une valeur instantanée des données de réflexion, R est une valeur des données de référence et k est un rapport prédéterminé compris entre 0% et 100%. Par exemple, k est inférieur à 25%, plus particulièrement inférieur à 20%, plus particulièrement inférieur à 15%, plus particulièrement inférieur à 10%, notamment de l'ordre de 5%.

En variante ou en combinaison, un signal de déplacement peut être un signal de déplacement, dit signal de déplacement négatif, représentatif du fait qu'un ouvrant surveillé a quitté une position de référence. Alternativement, le signal de déplacement contient une information de distance entre l'ouvrant et le dormant.

Par exemple, l'unité de traitement élabore alors un signal de déplacement de l'ouvrant surveillé lorsque l'unité de traitement détecte une valeur des signaux de réflexion instantanés ou des données de réflexion inférieure à une valeur de référence prédéterminée représentative du fait que le récepteur 26 ne détecte plus de rayonnement électromagnétique réfléchi. En variante ou en combinaison, l'unité de traitement peut élaborer un signal de déplacement de l'ouvrant lorsqu'elle détecte une variation de la quantité 31 d'énergie du rayonnement électromagnétique réfléchi captée par le récepteur 26 pour une position courante de l'ouvrant par rapport à la quantité 30 d'énergie du rayonnement électromagnétique réfléchi captée par le récepteur 26 lorsque l'ouvrant est placé dans une position de référence, telle qu'une position fermée.

L'unité de traitement peut ainsi être programmée pour élaborer un signal de déplacement lorsqu'au moins une valeur absolue de la différence entre les données de réflexion et des données de référence fournies par le récepteur 26 lorsque l'ouvrant surveillé est dans une position de référence, dépasse une valeur seuil prédéterminée. Cette valeur seuil prédéterminée peut être un pourcentage des dites données de référence.

Par exemple, un signal de déplacement est élaboré lorsque IR-SI/R > k, où S est une valeur instantanée des données de réflexion, R est une valeur des données de référence et k est un rapport prédéterminé compris entre 0% et 100%. Par exemple, k est supérieur à 5%, plus particulièrement supérieur à 10%, plus particulièrement supérieur à 15%, plus particulièrement supérieur à 20%, notamment de l'ordre de 25%.

Selon un autre exemple, l'unité de traitement peut être programmée pour élaborer un signal de déplacement lorsque les données de réflexion deviennent supérieures ou inférieures à une valeur seuil 32 prédéterminée, qui peut être un seuil inférieur ou un seuil supérieur, selon la position de référence à surveiller et l'emplacement du capteur par rapport à l'ouvrant.

Par ailleurs, le capteur 23 comprend également avantageusement au moins un accéléromètre adapté pour fournir des signaux représentatifs d'une accélération de l'ouvrant surveillé par rapport au dormant 22. Un accéléromètre peut être placé sur l'ouvrant 21 ou bien sur le dormant 22 à proximité ou sur le châssis encadrant l'ouvrant. Un tel accéléromètre peut être utilisé pour détecter des chocs, notamment des vibrations, sur l'ouvrant lorsqu'il est fixé à l'ouvrant ou sur le dormant lorsqu'il est fixé au dormant. En particulier ces chocs peuvent parvenir lors de l'ouverture, de la fermeture de l'ouvrant, ou lorsque l'ouvrant est manipulé brusquement. Les vibrations liées aux chocs peuvent se propager aussi sur le dormant que sur l'ouvrant. L'accéléromètre permet également de détecter un déplacement de l'ouvrant en particulier lorsqu'il est placé sur l'ouvrant. Un tel accéléromètre permet notamment de confirmer un signal de déplacement émis par l'unité de traitement à partir des données de réflexion. Il peut également permettre de détecter un éventuel déplacement de l'ouvrant alors même que les données de réflexion ne permettraient pas une telle détection. Il peut permettre également d'augmenter la fréquence de mesure des signaux de réflexion instantanés et/ou la fréquence de comparaison entre les données de réflexion et les données de référence par l'unité de traitement. Néanmoins, un tel accéléromètre n'est pas suffisant à lui seul, par exemple pour détecter une ouverture lente de l'ouvrant.

En outre, si l'ouvrant surveillé est un battant, le capteur 23 peut comprendre également un magnétomètre adapté pour fournir des signaux représentatifs d'une orientation de l'ouvrant par rapport au dormant 22. Ainsi, le magnétomètre peut être utilisé pour détecter un changement d'orientation d'un ouvrant battant. Le signal de déplacement peut alternativement être utilisé pour confirmer l'information d'accélération de l'ouvrant ou l'information d'orientation de l'ouvrant fournie par le magnétomètre.

Dans certains modes de réalisation avantageux non représentés, le capteur 23 comprend également des moyens de communication sans fils des signaux de déplacement à une centrale de traitement. En particulier, les moyens de communication sans fils peuvent être adaptés pour transmettre des signaux de déplacement par ondes radio, sonores, ultrasonores ou optique. Ces moyens de communication sans fils peuvent par exemple être choisis parmi les antennes Wi-Fi® ou les antennes Bluetooth®. En outre, une telle centrale de traitement peut communiquer avec une pluralité de capteurs 23. La centrale de traitement peut également communiquer à distance avec un serveur Internet.

Le capteur 23 peut comprendre une interface homme-machine permettant à l'utilisateur d'interagir avec le capteur 23. Par exemple, cette interface homme-machine, peut être choisie dans le groupe constitué de boutons et d'un écran tactile, de façon à permettre à l'utilisateur de démarrer une étape de calibration.

Un procédé domotique de surveillance selon l'invention peut comprendre une étape de calibration. Cette étape consiste à mesurer la quantité 30 d'énergie du rayonnement électromagnétique réfléchi captée par le récepteur 26 lorsque l'ouvrant est dans une position de référence, notamment une position fermée ou entrouverte. Cette étape de calibration peut être démarrée automatiquement ou manuellement. Par exemple, l'utilisateur peut démarrer l'étape de calibration en interagissant avec l'interface homme-machine du capteur. Néanmoins, l'unité de traitement peut aussi être adaptée pour démarrer une étape de calibration automatiquement à la mise sous tension du dispositif 20 domotique et en particulier de l'unité de traitement. Lors de l'étape de calibration l'utilisateur positionne l'ouvrant selon une position de référence souhaitée pour que le capteur 23 puisse mesurer la quantité d'énergie du rayonnement électromagnétique réfléchi captée par le récepteur 26 afin d'élaborer des données de référence à partir des signaux de réflexion captés par le récepteur 26. Lors de cette étape, l'unité de traitement du capteur 23 est avantageusement adapté pour régler la puissance du rayonnement électromagnétique émis par l'émetteur 24 en fonction de la quantité d'énergie du rayonnement électromagnétique réfléchi captée par le récepteur 26.

Ainsi, lorsque la quantité d'énergie du rayonnement électromagnétique réfléchi captée par le récepteur 26 lorsque l'ouvrant est en position de référence est trop faible, c'est-à-dire trop proche d'une quantité 36 d'énergie des rayonnements électromagnétiques captée par le récepteur 26 lorsque l'ouvrant est en position ouverte, la puissance du rayonnement électromagnétique émis est augmentée en augmentant l'intensité du courant électrique d'alimentation de l'émetteur 24 de façon à augmenter la puissance électrique d'alimentation de l'émetteur 24.

Néanmoins, de préférence, l'unité de traitement est aussi adaptée pour minimiser la puissance du rayonnement électromagnétique émis par l'émetteur 24 pour réduire la consommation d'énergie électrique du capteur et augmenter l'autonomie de l'alimentation électrique. En outre, avantageusement et selon l'invention la portion du dormant 22 réfléchissant le rayonnement électromagnétique émis est choisie de façon à ne pas produire une réflexion spéculaire de ce rayonnement électromagnétique émis, mais uniquement une rétrodiffusion ou une réflexion partielle. De la sorte, on empêche toute tentative de neutralisation du dispositif selon l'invention consistant à placer une surface parfaitement réfléchissante en regard du capteur. En effet, une quantité d'énergie du rayonnement électromagnétique réfléchi trop importante, notamment supérieure à celle correspondant à la position de référence de l'ouvrant surveillé, peut être utilisée par l'unité de traitement pour émettre un signal d'alarme.

Le démarrage de l'étape de calibration peut nécessiter une authentification de l'utilisateur.

Les données de référence élaborées lors de cette étape de calibration sont ensuite enregistrées dans la mémoire du capteur 23.

Après l'étape de calibration, lorsque le capteur 23 est activé, l'unité de traitement du capteur 23 réveille l'émetteur 24 et le récepteur 26 périodiquement afin d'effectuer des mesures de la quantité 31 d'énergie du rayonnement électromagnétique réfléchi tel que représenté à la figure 6. Ces mesures peuvent être effectuées par exemple toutes les trois secondes. Néanmoins, rien n'empêche d'avoir une durée entre chaque mesure inférieure ou supérieure à trois secondes. Entre chaque mesure, l'unité de traitement est adaptée pour arrêter l'alimentation électrique de l'émetteur 24 et du récepteur 26 afin d'augmenter l'autonomie de l'alimentation électrique.

En outre, de préférence, l'unité de traitement est adaptée pour augmenter la fréquence des mesures de la quantité d'énergie du rayonnement électromagnétique réfléchi lorsque des signaux fournis par un accéléromètre représentatifs d'une accélération de l'ouvrant sont supérieurs à un seuil, dit seuil d'accélération. Par exemple, le seuil d'accélération peut être représentatif d'une accélération comprise entre 0,15 m/s² et 5 m/s².

L'unité de traitement élabore ensuite des données de réflexion à partir des signaux de réflexion instantanés délivrés par le récepteur 26 puis compare les données de réflexion aux données de référence enregistrées dans la mémoire du capteur 23.

En particulier, lorsque le capteur 23 est placé sur une bordure longitudinale de la face frontale de l'ouvrant la plus proche d'un chant de fermeture de l'ouvrant, l'ouverture de l'ouvrant entraîne une diminution de la valeur des données de réflexion. En effet, le rayonnement électromagnétique émis par l'émetteur 24, s'éloignant du dormant 22 lors de l'ouverture de l'ouvrant, n'est plus dirigé vers la portion du dormant 22 vers laquelle ces rayonnements électromagnétiques émis est dirigé lorsque l'ouvrant est en position de référence. La quantité d'énergie du rayonnement électromagnétique réfléchi captée par le récepteur 26 diminue donc au cours de l'ouverture de l'ouvrant. En particulier, l'angle de réflexion varie de telle sorte que le récepteur 26 capte une quantité d'énergie du rayonnement électromagnétique réfléchi inférieure à celle qu'il capte lorsque l'ouvrant est en position de référence. L'unité de traitement compare alors la valeur des données de réflexion à une valeur de référence comme indiqué ci-dessus.

Lorsque le dispositif 20 domotique est placé sur une bordure longitudinale de la face frontale de l'ouvrant la plus proche d'un chant le plus proche de l'axe de rotation d'un ouvrant battant ou oscillo-battant, l'ouverture de l'ouvrant entraîne une augmentation de la valeur des données de réflexion car l'émetteur 24 et le récepteur 26 se rapprochent du dormant 22. Ainsi, l'unité de traitement compare les données de réflexion à un plafond, dit plafond de déplacement, calculé par l'unité de traitement en fonction des données de référence représentatives des signaux de réflexion lorsque l'ouvrant est dans une position de référence par rapport au dormant 22 et des données de référence représentatives des signaux de réflexion lorsque l'ouvrant est dans une position ouverte et donc de la quantité 36 d'énergie du rayonnement électromagnétique réfléchi captée par le récepteur 26 lorsque l'ouvrant est dans une position ouverte. Lorsque la valeur des données de réflexion est supérieure au plafond de déplacement, l'unité de traitement émet un signal de déplacement indiquant que l'ouvrant a été déplacé vers une position ouverte.

En particulier, un procédé et un dispositif selon l'invention permettent de détecter un déplacement -notamment une ouverture-, ou une absence de déplacement, d'un ouvrant surveillé d'une distance qui peut être de l'ordre de 1 cm.

En outre, afin d'éviter les fausses détections, le signal de déplacement peut être émis après une étape de confirmation lors de laquelle l'unité de traitement vérifie que plusieurs mesures, successives dans le temps de la quantité d'énergie du rayonnement électromagnétique réfléchi dépassent le seuil ou le plafond de déplacement. Lors de cette étape de confirmation, la fréquence des mesures peut être augmentée par l'unité de traitement à partir de la première mesure d'une quantité d'énergie du rayonnement électromagnétique réfléchi dépassant le seuil ou le plafond de déplacement. L'augmentation de la fréquence des mesures permet de déclencher un signal de déplacement plus rapidement.

Dans une application d'alarme, le signal de déplacement est transmis grâce aux moyens de communication sans fils du dispositif 20 domotique à la centrale de traitement adaptée pour déclencher une alarme et pour avertir l'utilisateur d'une intrusion. Néanmoins, rien n'empêche d'adapter une unité de traitement d'un dispositif domotique selon l'invention pour déclencher elle-même une alarme.

De préférence, le signal de déplacement est élaboré lorsque les signaux fournis par l'accéléromètre, représentatifs d'une accélération de l'ouvrant surveillé, sont supérieurs à un seuil, dit seuil de détection d'accélération. Ainsi, lorsque l'ouvrant subit une accélération suffisante pour que les signaux fournis par l'accéléromètre soient supérieurs au seuil de détection d'accélération, une alarme peut être déclenchée. En particulier un tel seuil de détection peut être représentatif d'une accélération de l'ordre de 1 m/s².

Par ailleurs, les données de réflexion sont comparées à des données représentatives de l'orientation de l'ouvrant par rapport au dormant 22 fournies par le magnétomètre porté par l'ouvrant de façon à confirmer qu'un déplacement de l'ouvrant s'est produit.

Une telle comparaison permet de valider la détection d'un déplacement de l'ouvrant avant d'émettre un signal de déplacement et en conséquence de réduire le risque de déclencher une fausse alarme.

L'invention concerne donc un dispositif 20 domotique de surveillance d'un ouvrant par rapport à un dormant 22. L'invention concerne également un procédé domotique de surveillance d'un ouvrant par rapport à un dormant 22.

L'invention peut faire l'objet de nombreuses variantes de réalisation par rapport aux modes de réalisation décrits ci-dessus et représentés sur les figures. En particulier, le dispositif 20 domotique peut comprendre en combinaison de l'émetteur 24 et du récepteur 26 uniquement un magnétomètre ou uniquement un accéléromètre ou bien un magnétomètre et un accéléromètre. Un dispositif domotique selon l'invention peut comprendre une pluralité d'ouvrants, chaque ouvrant pouvant comprendre une pluralité de capteurs 23. En outre, le capteur peut être intégré à l'ouvrant ou au dormant, notamment dans un alésage d'un chant de l'ouvrant ou du dormant (en particulier dans le chant du châssis encadrant l'ouvrant).

L'invention peut donc être appliquée pour détecter une intrusion dans un espace clos à protéger tel qu'une maison, un bâtiment industriel, une boutique.

## Revendications

1. Procédé de surveillance d'au moins un panneau, dit ouvrant (21) surveillé, monté par rapport à un dormant (22) de façon à pouvoir être déplacé par rapport au dormant, **caractérisé en ce que** :
- on fixe au moins un émetteur (24) en saillie sur une face frontale d'un premier élément choisi parmi le dormant (22) et un ouvrant (21) surveillé, chaque émetteur étant choisi et agencé pour émettre un rayonnement, choisi parmi un rayonnement électromagnétique et un rayonnement acoustique, en direction d'un deuxième élément :
• distinct dudit premier élément,
• choisi parmi le dormant et un ouvrant surveillé, pour que le rayonnement émis soit au moins pour partie réfléchi par ledit deuxième élément,
- on choisit et agence au moins un récepteur (26) pour :
• capter un rayonnement, dit rayonnement réfléchi, issu d'au moins un émetteur fixé à un premier élément et réfléchi par un deuxième élément,
• et fournir des signaux, dits signaux de réflexion, représentatifs d'au moins une caractéristique dudit rayonnement réfléchi,
- chaque émetteur, chaque récepteur, chaque premier élément, chaque deuxième élément étant choisis et agencés de telle sorte qu'au moins une partie desdits signaux de réflexion est modifiée lorsqu'au moins un ouvrant surveillé est déplacé au moins à partir d'au moins une position de référence prédéterminée de cet ouvrant surveillé,
- à chaque instant, les signaux de réflexion, dits signaux de réflexion instantanés, fournis par chaque récepteur sont comparés à au moins une valeur, dite valeur de référence,
- au moins un signal, dit signal de déplacement, représentatif d'un déplacement d'au moins un ouvrant surveillé par rapport à une position de référence est élaboré en fonction du résultat de la comparaison entre les signaux de réflexion instantanés et chaque valeur de référence,
ledit au moins un récepteur (26) étant fixé en saillie sur une face frontale d'un troisième élément choisi parmi le dormant et un ouvrant, et de telle sorte que les rayonnements émis par l'émetteur (24) présentent un axe (28) d'émission formant un angle α supérieur à 5° et inférieur à 90° par rapport à la face frontale dudit premier élément, et de façon que :
- l'axe (28) d'émission du rayonnement émis soit orienté vers ledit deuxième élément,
- le rayonnement émis soit réfléchi par ledit deuxième élément vers le récepteur (26).

2. Procédé selon la revendication 1 **caractérisé en ce qu'**au moins un récepteur (26) est fixé sur ledit premier élément sur lequel au moins un émetteur (24) est fixé, ce récepteur (26) étant adapté pour pouvoir recevoir un rayonnement réfléchi issu d'au moins un tel émetteur (24) fixé sur ce premier élément.

3. Procédé selon l'une quelconque des revendications 1 ou 2 **caractérisé en ce que** chaque récepteur (26) est choisi pour pouvoir fournir des signaux de réflexion instantanés représentatifs d'une quantité d'énergie dudit rayonnement réfléchi capté par le récepteur (26).

4. Procédé selon l'une quelconque des revendications 1 à 3 **caractérisé en ce qu'**au moins un émetteur et au moins un récepteur sont choisis et agencés pour que lesdits signaux de réflexion instantanés fournis par ce récepteur soient au moins sensiblement égaux à une valeur prédéfinie lorsque chaque ouvrant surveillé dont le déplacement modifie les signaux de réflexion fournis par ce récepteur est déplacé à partir d'une position de référence de cet ouvrant surveillé d'une distance supérieure à une distance, dite distance minimale de déplacement, inférieure à 5 cm.

5. Procédé selon l'une des revendications 1 à 4 **caractérisé en ce qu'**au moins un émetteur et au moins un récepteur et ledit deuxième élément sont choisis et agencés pour que le récepteur puisse capter uniquement un rayonnement réfléchi par ce deuxième élément si ce deuxième élément est placé à moins de 10 cm de ce récepteur.

6. Dispositif (20) de surveillance d'au moins un panneau, dit ouvrant (21) surveillé, monté par rapport à un dormant (22) de façon à pouvoir être déplacé par rapport au dormant, **caractérisé en ce qu'**il comprend :
- au moins un émetteur (24) adapté pour pouvoir être fixé en saillie sur une face frontale d'un premier élément choisi parmi le dormant et un ouvrant (21) surveillé, chaque émetteur étant adapté pour émettre un rayonnement, choisi parmi un rayonnement électromagnétique et un rayonnement acoustique, en direction d'au moins une portion d'au moins un deuxième élément :
• distinct dudit premier élément,
• choisi parmi le dormant et un ouvrant surveillé, pour que le rayonnement émis soit au moins pour partie réfléchi par ledit deuxième élément,
- au moins un récepteur (26) adapté et agencé pour :
• capter un rayonnement, dit rayonnement réfléchi, issu d'au moins un émetteur fixé à un premier élément et réfléchi par au moins un deuxième élément,
• et fournir des signaux, dits signaux de réflexion, représentatifs d'au moins une caractéristique dudit rayonnement réfléchi,
- chaque émetteur, chaque récepteur, chaque premier élément, chaque deuxième élément étant choisis et adaptés pour pouvoir être agencés de telle sorte qu'au moins une partie desdits signaux de réflexion est modifiée lorsqu'au moins un ouvrant surveillé est déplacé au moins à partir d'au moins une position de référence prédéterminée de cet ouvrant surveillé,
- une unité de traitement des signaux de réflexion adaptée pour :
• comparer, à chaque instant, les signaux de réflexion, dits signaux de réflexion instantanés, fournis par chaque récepteur à au moins une valeur, dite valeur de référence,
- élaborer au moins un signal, dit signal de déplacement, représentatif d'un déplacement d'au moins un ouvrant surveillé par rapport à une position de référence en fonction du résultat de la comparaison entre les signaux de réflexion instantanés et chaque valeur de référence,
ledit au moins un récepteur (26) étant fixé en saillie sur une face frontale d'un troisième élément choisi parmi le dormant et un ouvrant, et de telle sorte que les rayonnements émis par l'émetteur (24) présentent un axe (28) d'émission formant un angle α supérieur à 5° et inférieur à 90° par rapport à la face frontale dudit premier élément, et de façon que :
- l'axe (28) d'émission du rayonnement émis soit orienté vers ledit deuxième élément,
- le rayonnement émis soit réfléchi par ledit deuxième élément vers le récepteur (26).

7. Dispositif selon la revendication 6 **caractérisé en ce qu'**il comporte au moins un récepteur (26) fixé sur ledit premier élément sur lequel au moins un émetteur (24) est fixé, ce récepteur étant adapté pour pouvoir recevoir un rayonnement réfléchi issu d'au moins un tel émetteur fixé sur ce premier élément.

8. Dispositif selon l'une quelconque des revendications 6 ou 7, **caractérisé en ce que** chaque récepteur (26) est adapté pour pouvoir fournir des signaux de réflexion instantanés représentatifs d'une quantité d'énergie dudit rayonnement réfléchi capté par le récepteur (26).

9. Dispositif selon l'une des revendications 7 ou 8 **caractérisé en ce qu'**il comprend un boîtier (37) comprenant une paroi délimitant une enceinte du boîtier dans laquelle sont placés au moins un émetteur (24) et au moins un récepteur (26), la paroi présentant au moins une fenêtre transparente audit rayonnement électromagnétique émis -notamment une ouverture- permettant le passage de ce rayonnement électromagnétique émis vers l'extérieur de l'enceinte du boîtier ; et au moins une fenêtre transparente audit rayonnement électromagnétique réfléchi - notamment une ouverture- permettant le passage dudit rayonnement électromagnétique réfléchi depuis l'extérieur de l'enceinte du boîtier vers l'intérieur de l'enceinte du boîtier.

10. Dispositif selon l'une des revendications 6 à 9, **caractérisé en ce qu'**il comprend en outre au moins un accéléromètre fixé à un élément choisi parmi le dormant (22) et un ouvrant (21) surveillé, cet accéléromètre étant adapté pour fournir des signaux représentatifs d'une accélération d'au moins un ouvrant (21) surveillé par rapport au dormant (22).

11. Dispositif selon l'une des revendications 6 à 10, **caractérisé en ce qu'**il comprend en outre au moins un magnétomètre fixé à un ouvrant (21) surveillé et adapté pour fournir des signaux représentatifs d'une orientation de cet ouvrant (21) surveillé par rapport au dormant (22).

12. Dispositif selon l'une des revendications 6 à 11, **caractérisé en ce que** le dispositif de surveillance comprend au moins une alimentation électrique.

13. Baie comprenant un dormant et au moins un ouvrant monté par rapport à un dormant (22) de façon à pouvoir être déplacé par rapport au dormant, et un dispositif de surveillance d'au moins un ouvrant, dit ouvrant (21) surveillé, **caractérisée en ce qu'**elle comporte au moins un dispositif de surveillance selon l'une des revendications 6 à 12.

## Patentansprüche

1. Verfahren zur Überwachung mindestens einer Platte, genannt überwachter Flügel (21), welche bezogen auf eine Zarge (22) derart angebracht ist, dass sie relativ zu der Zarge beweglich ist, **dadurch gekennzeichnet, dass**:
- mindestens ein Sender (24) auf einer Vorderseite eines ersten Elements, das entweder die Zarge (22) oder ein überwachter Flügel (21) ist, hervorstehend befestigt ist, wobei jeder Sender derart ausgewählt und angeordnet ist, dass er eine Strahlung, die entweder eine elektromagnetische Strahlung oder eine akustische Strahlung ist, in Richtung eines zweiten Elements emittiert,
• welches sich von dem ersten Element unterscheidet,
• welches entweder die Zarge oder ein überwachter Flügel ist, derart, dass die emittierte Strahlung zumindest teilweise durch das zweite Element reflektiert wird,
- mindestens ein Empfänger (26) derart ausgewählt und angeordnet ist,
• dass eine Strahlung, genannt reflektierte Strahlung, erfasst wird, welche von mindestens einem an einem ersten Element befestigten Sender ausgeht und durch ein zweites Element reflektiert wird,
• und dass Signale, genannt Reflexionssignale, geliefert werden, die für mindestens eine Eigenschaft der reflektierten Strahlung repräsentativ sind,
- wobei jeder Sender, jeder Empfänger, jedes erste Element, jedes zweite Element derart ausgewählt und angeordnet ist, dass mindestens ein Teil der Reflexionssignale verändert wird, wenn mindestens ein überwachter Flügel zumindest ausgehend von mindestens einer vorbestimmten Referenzposition des überwachten Flügels bewegt wird,
- die durch jeden Empfänger gelieferten Reflexionssignale, genannt momentane Reflexionssignale, zu jedem Zeitpunkt mit mindestens einem Wert, genannt Referenzwert, verglichen werden,
- mindestens ein Signal, genannt Bewegungssignal, welches für eine Bewegung mindestens eines überwachten Flügels relativ zu einer Referenzposition repräsentativ ist, in Abhängigkeit von dem Ergebnis des Vergleichs zwischen den momentanen Reflexionssignalen und jedem Referenzwert erzeugt wird,
wobei der mindestens eine Empfänger (26) auf einer Vorderseite eines dritten Elements, das entweder die Zarge oder ein Flügel ist, hervorstehend befestigt ist, derart, dass die durch den Sender (24) emittierte Strahlung eine Emissionsachse (28) aufweist, welche einen Winkel α bildet, der bezogen auf die Vorderseite des ersten Elements größer als 5° und kleiner als 90° ist, und derart, dass:
- die Emissionsachse (28) der emittierten Strahlung in Richtung des zweiten Elements ausgerichtet ist,
- die emittierte Strahlung durch das zweite Element in Richtung des Empfängers (26) reflektiert wird.

2. Verfahren nach Anspruch 1, **dadurch gekennzeichnet, dass** mindestens ein Empfänger (26) auf dem ersten Element befestigt ist, auf welchem mindestens ein Sender (24) befestigt ist, wobei der Empfänger (26) zum Empfangen einer von mindestens einem auf dem ersten Element befestigten derartigen Sender (24) ausgehenden reflektierten Strahlung ausgebildet ist.

3. Verfahren nach einem der Ansprüche 1 oder 2, **dadurch gekennzeichnet, dass** jeder Empfänger (26) derart ausgewählt ist, dass er in der Lage ist, momentane Reflexionssignale zu liefern, welche für eine Energiemenge der durch den Empfänger (26) erfassten reflektierten Strahlung repräsentativ sind.

4. Verfahren nach einem der Ansprüche 1 bis 3, **dadurch gekennzeichnet, dass** mindestens ein Sender und mindestens ein Empfänger derart ausgewählt und angeordnet sind, dass die durch den Empfänger gelieferten momentanen Reflexionssignale zumindest im Wesentlichen einem vorgegebenen Wert entsprechen, wenn jeder überwachte Flügel, dessen Bewegung die durch den Empfänger gelieferten Reflexionssignale verändert, ausgehend von einer Referenzposition des überwachten Flügels um eine Distanz bewegt wird, welche größer ist als eine Distanz, genannt Mindestbewegungsdistanz, welche kleiner ist als 5 cm.

5. Verfahren nach einem der Ansprüche 1 bis 4, **dadurch gekennzeichnet, dass** mindestens ein Sender und mindestens ein Empfänger und das zweite Element derart ausgewählt und angeordnet sind, dass die durch das zweite Element reflektierte Strahlung vom Empfänger nur dann erfassbar ist, wenn das zweite Element weniger als 10 cm von dem Empfänger entfernt platziert ist.

6. Vorrichtung (20) zur Überwachung mindestens einer Platte, genannt überwachter Flügel (21), welche bezogen auf eine Zarge (22) derart angebracht ist, dass sie relativ zu der Zarge beweglich ist, **dadurch gekennzeichnet, dass** die Vorrichtung Folgendes umfasst:
- mindestens einen Sender (24), der auf einer Vorderseite eines ersten Elements, das entweder die Zarge oder ein überwachter Flügel (21) ist, hervorstehend befestigbar ist, wobei jeder Sender dazu ausgebildet ist, eine Strahlung, die entweder eine elektromagnetische Strahlung oder eine akustische Strahlung ist, in Richtung mindestens eines Teils von mindestens einem zweiten Element zu emittieren,
• welches sich von dem ersten Element unterscheidet,
• welches entweder die Zarge oder ein überwachter Flügel ist, derart, dass die emittierte Strahlung zumindest teilweise durch das zweite Element reflektierbar ist,
- mindestens einen Empfänger (26), der derart ausgebildet und angeordnet ist,
• dass er eine Strahlung, genannt reflektierte Strahlung, erfasst, welche von mindestens einem an einem ersten Element befestigten Sender ausgeht und durch mindestens ein zweites Element reflektiert wird,
• und dass er Signale, genannt Reflexionssignale, liefert, welche für mindestens eine Eigenschaft der reflektierten Strahlung repräsentativ sind,
- wobei jeder Sender, jeder Empfänger, jedes erste Element, jedes zweite Element derart auswählbar und anordenbar ist, dass mindestens ein Teil der Reflexionssignale veränderbar ist, wenn mindestens ein überwachter Flügel zumindest ausgehend von mindestens einer vorbestimmten Referenzposition des überwachten Flügels bewegt wird,
- eine Reflexionssignal-Verarbeitungseinheit, die dazu ausgebildet ist,
• die durch jeden Empfänger gelieferten Reflexionssignale, genannt momentane Reflexionssignale, zu jedem Zeitpunkt mit mindestens einem Wert, genannt Referenzwert, zu vergleichen,
• mindestens ein Signal, genannt Bewegungssignal, welches für eine Bewegung mindestens eines überwachten Flügels relativ zu einer Referenzposition repräsentativ ist, in Abhängigkeit von dem Ergebnis des Vergleichs zwischen den momentanen Reflexionssignalen und jedem Referenzwert zu erzeugen,
wobei der mindestens eine Empfänger (26) auf einer Vorderseite eines dritten Elements, das entweder die Zarge oder ein Flügel ist, hervorstehend befestigt ist, derart, dass die durch den Sender (24) emittierte Strahlung eine Emissionsachse (28)aufweist, welche einen Winkel α bildet, der bezogen auf die Vorderseite des ersten Elements größer als 5° und kleiner als 90° ist, und derart, dass
- die Emissionsachse (28) der emittierten Strahlung in Richtung des zweiten Elements ausgerichtet ist,
- die emittierte Strahlung durch das zweite Element in Richtung des Empfängers (26) reflektierbar ist.

7. Vorrichtung nach Anspruch 6, **dadurch gekennzeichnet, dass** die Vorrichtung mindestens einen Empfänger (26) umfasst, der auf dem ersten Element befestigt ist, auf welchem mindestens ein Sender (24) befestigt ist, wobei der Empfänger zum Empfangen einer von mindestens einem auf dem ersten Element befestigten derartigen Sender ausgehenden reflektierten Strahlung ausgebildet ist.

8. Vorrichtung nach einem der Ansprüche 6 oder 7, **dadurch gekennzeichnet, dass** jeder Empfänger (26) derart ausgebildet ist, dass er in der Lage ist, momentane Reflexionssignale, die für eine Energiemenge der durch den Empfänger (26) erfassten reflektierten Strahlung repräsentativ sind, zu liefern.

9. Vorrichtung nach einem der Ansprüche 7 oder 8, **dadurch gekennzeichnet, dass** die Vorrichtung ein Gehäuse (37) umfasst, welches eine Wand umfasst, die einen abgeschlossenen Bereich des Gehäuses begrenzt, in welchem mindestens ein Sender (24) und mindestens ein Empfänger (26) platziert sind, wobei die Wand mindestens ein Fenster, einschließlich einer Öffnung, aufweist, welches für die emittierte elektromagnetische Strahlung durchlässig ist und den Durchtritt der aus dem abgeschlossenen Bereich des Gehäuses heraus emittierten elektromagnetischen Strahlung ermöglicht, und mindestens ein Fenster, einschließlich einer Öffnung, aufweist, welches für die reflektierte elektromagnetische Strahlung durchlässig ist und den Durchtritt der von außerhalb des abgeschlossenen Bereichs des Gehäuses in Richtung des Inneren des abgeschlossenen Bereichs des Gehäuses reflektierten elektromagnetischen Strahlung ermöglicht.

10. Vorrichtung nach einem der Ansprüche 6 bis 9, **dadurch gekennzeichnet, dass** die Vorrichtung des Weiteren mindestens einen an einem Element, das entweder die Zarge (22) oder ein überwachter Flügel (21) ist, befestigten Beschleunigungsmesser umfasst, wobei der Beschleunigungsmesser dazu ausgebildet ist, Signale zu liefern, die für eine Beschleunigung mindestens eines überwachten Flügels (21) bezogen auf eine Zarge (22) repräsentativ sind.

11. Vorrichtung nach einem der Ansprüche 6 bis 10, **dadurch gekennzeichnet, dass** die Vorrichtung des Weiteren mindestens ein an einem überwachten Flügel (21) befestigtes und zum Liefern von Signalen, die für eine Ausrichtung des überwachten Flügels (21) bezogen auf die Zarge (21) repräsentativ sind, ausgebildetes Magnetometer umfasst.

12. Vorrichtung nach einem der Ansprüche 6 bis 11, **dadurch gekennzeichnet, dass** die Vorrichtung zur Überwachung mindestens eine Stromversorgung umfasst.

13. Öffnung, umfassend eine Zarge und mindestens einen Flügel, der bezogen auf eine Zarge (22) derart angebracht ist, dass er relativ zu der Zarge beweglich ist, und eine Vorrichtung zur Überwachung mindestens eines Flügels, genannt überwachter Flügel (21), **dadurch gekennzeichnet, dass** die Öffnung mindestens eine Vorrichtung zur Überwachung nach einem der Ansprüche 6 bis 12 umfasst.

## Claims

1. Method for monitoring at least one panel, called a monitored opening panel (21), which is mounted relative to a frame (22) in such a manner that it can be displaced relative to the frame, **characterised in that**:
- at least one transmitter (24) is fixed in a protruding manner to a front face of a first element chosen from the frame (22) and a monitored opening panel (21), each transmitter being chosen and arranged to transmit radiation, chosen from electromagnetic radiation and acoustic radiation, in the direction towards a second element:
• separate from the first element,
• chosen from among the frame and a monitored opening panel, so that the transmitted radiation is at least partially reflected by said second element,
- at least one receiver (26) is chosen and arranged to:
• pick up radiation, called reflected radiation, coming from at least one transmitter fixed to a first element and reflected by a second element,
• and provide signals, called reflection signals, which are representative of at least one characteristic of said reflected radiation,
- each transmitter, each receiver, each first element, each second element being chosen and arranged so that at least part of said reflection signals is modified when at least one monitored opening panel is displaced at least from at least one predetermined reference position of that monitored opening panel,
- the reflection signals, called instantaneous reflection signals, provided by each receiver are continuously compared to at least one value, called a reference value,
- at least one signal, called a displacement signal, which is representative of a displacement of at least one monitored opening panel relative to a reference position is prepared as a function of the result of the comparison between the instantaneous reflection signals and each reference value,
said at least one receiver (26) being fixed in a protruding manner to a front face of a third element chosen from the frame and an opening panel, and in such a manner that the radiation transmitted by the transmitter (24) has an axis (28) of transmission which forms an angle α greater than 5° and less than 90° relative to the front face of said first element, and in such a manner that:
- the axis (28) of transmission of the transmitted radiation is oriented towards said second element,
- the transmitted radiation is reflected by said second element towards the receiver (26).

2. Method according to claim 1, **characterised in that** at least one receiver (26) is fixed to said first element to which at least one transmitter (24) is fixed, that receiver (26) being adapted to be able to receive reflected radiation coming from at least one such transmitter (24) fixed to that first element.

3. Method according to either claim 1 or claim 2, **characterised in that** each receiver (26) is chosen to be able to provide instantaneous reflection signals which are representative of an amount of energy of said reflected radiation picked up by the receiver (26).

4. Method according to any one of claims 1 to 3, **characterised in that** at least one transmitter and at least one receiver are chosen and arranged so that said instantaneous reflection signals provided by that receiver are at least substantially equal to a predefined value when each monitored opening panel whose displacement modifies the reflection signals provided by that receiver is displaced from a reference position of that monitored opening panel by a distance greater than a distance, called a minimum displacement distance, less than 5 cm.

5. Method according to any one of claims 1 to 4, **characterised in that** at least one transmitter and at least one receiver and said second element are chosen and arranged so that the receiver is able to pick up only radiation reflected by that second element if that second element is placed less than 10 cm from that receiver.

6. Device (20) for monitoring at least one panel, called a monitored opening panel (21), which is mounted relative to a frame (22) in such a manner that it can be displaced relative to the frame, **characterised in that** it comprises:
- at least one transmitter (24) adapted to be able to be fixed in a protruding manner to a front face of a first element chosen from the frame and a monitored opening panel (21), each transmitter being adapted to transmit radiation, chosen from electromagnetic radiation and acoustic radiation, in the direction towards at least a portion of at least one second element:
• separate from the first element,
• chosen from among the frame and a monitored opening panel, so that the transmitted radiation is at least partially reflected by said second element,
- at least one receiver (26) chosen and arranged to:
• pick up radiation, called reflected radiation, coming from at least one transmitter fixed to a first element and reflected by at least one second element,
• and provide signals, called reflection signals, which are representative of at least one characteristic of said reflected radiation,
- each transmitter, each receiver, each first element, each second element being chosen and adapted to be able to be arranged so that at least part of said reflection signals is modified when at least one monitored opening panel is displaced at least from at least one predetermined reference position of that monitored opening panel,
- a processing unit for the reflection signals adapted to:
• continuously compare the reflection signals, called instantaneous reflection signals, provided by each receiver to at least one value, called a reference value,
- prepare at least one signal, called a displacement signal, which is representative of a displacement of at least one monitored opening panel relative to a reference position as a function of the comparison between the instantaneous reflection signals and each reference value,
said at least one receiver (26) being fixed in a protruding manner to a front face of a third element chosen from the frame and an opening panel, and in such a manner that the radiation transmitted by the transmitter (24) has an axis (28) of transmission which forms an angle α greater than 5° and less than 90° relative to the front face of said first element, and in such a manner that:
- the axis (28) of transmission of the transmitted radiation is oriented towards said second element,
- the transmitted radiation is reflected by said second element towards the receiver (26).

7. Device according to claim 6, **characterised in that** it comprises at least one receiver (26) fixed to said first element to which at least one transmitter (24) is fixed, that receiver being adapted to be able to receive reflected radiation coming from at least one such transmitter fixed to that first element.

8. Device according to either claim 6 or claim 7, **characterised in that** each receiver (26) is adapted to be able to provide instantaneous reflection signals which are representative of an amount of energy of said reflected radiation picked up by the receiver (26).

9. Device according to either claim 7 or claim 8, **characterised in that** it comprises a casing (37) comprising a wall which delimits an enclosure of the casing in which there are placed at least one transmitter (24) and at least one receiver (26), the wall having at least one window transparent to said transmitted electromagnetic radiation - especially an opening - which allows that transmitted electromagnetic radiation to pass to outside the enclosure of the casing; and at least one window transparent to said reflected electromagnetic radiation - especially an opening - which allows said reflected electromagnetic radiation to pass from outside the enclosure of the casing to inside the enclosure of the casing.

10. Device according to any one of claims 6 to 9, **characterised in that** it further comprises at least one accelerometer fixed to an element chosen from the frame (22) and a monitored opening panel (21), the accelerometer being adapted to provide signals which are representative of an acceleration of at least one monitored opening panel (21) relative to the frame (22).

11. Device according to any one of claims 6 to 10, **characterised in that** it further comprises at least one magnetometer fixed to a monitored opening panel (21) and adapted to provide signals which are representative of an orientation of that monitored opening panel (21) relative to the frame (22).

12. Device according to any one of claims 6 to 11, **characterised in that** the monitoring device comprises at least one power supply.

13. Structural opening having a frame and at least one opening panel mounted relative to a frame (22) in such a manner that it can be displaced relative to the frame, and a device for monitoring at least one opening panel, called a monitored opening panel (21), **characterised in that** it comprises at least one monitoring device according to any one of claims 6 to 12.
